# EUROPEAN PATENT APPLICATION

(11) **EP 4 092 440 A1**
(43) Date of publication of application: **23.11.2022**
(21) Application number: 20921703.3
(22) Date of filing: 23.10.2020
(51) Int. Cl.: G01S 7/36, H04W 72/04, H04B 17/345

(54) **TARGET DETECTION METHOD AND RADAR DEVICE**

(30) Priority: 24.02.2020 CN 202010110747
(71) Applicant: Huawei Technologies Co., Ltd., Shenzhen, Guangdong 518129, (CN)
(72) Inventor: GAO, Lei, Shenzhen, Guangdong 518129 (CN); MA, Sha, Shenzhen, Guangdong 518129 (CN); SONG, Sida, Shenzhen, Guangdong 518129 (CN); WU, Qian, Shenzhen, Guangdong 518129 (CN)
(74) Representative: Pfenning, Meinig & Partner mbB
(86) International application number: PCT/CN2020/123353
(87) International publication number: WO 2021/169338

(57) **Abstract**

A target detection method and a radar apparatus are provided, and belong to the radar field, and in particular, to a cooperative radar. The target detection method reduces mutual interference between radars through cooperation between the radars. The method includes: A radar apparatus performs at least one interference interception on a plurality of first time domain resources (S201), and determines a second time-frequency resource used for target detection in a first time-frequency resource based on a result of the at least one interference interception (S202). The plurality of first time domain resources are a subset of time domain resources corresponding to a time-frequency resource of a first detection apparatus, and the first time-frequency resource is the time-frequency resource of the first detection apparatus. Any two adjacent first time domain resources in the plurality of first time domain resources have a same time interval, and the interference interception is performed on some of the plurality of first time domain resources. The method and the radar apparatus may be applied to related fields such as automatic driving, so that interference between detection apparatuses disposed on a vehicle can be reduced, and automatic driving can be better implemented.

## Description

### CROSS-REFERENCE TO RELATED APPLICATIONS

This application claims priority to Chinese Patent Application No. 202010110747.8, filed with the China National Intellectual Property Administration on February 24, 2020 and entitled "TARGET DETECTION METHOD AND RADAR APPARATUS", which is incorporated herein by reference in its entirety.

### TECHNICAL FIELD

This application relates to the field of radar technologies, and in particular, to a target detection method and a radar apparatus.

### BACKGROUND

With development of science and technology, intelligent vehicles have gradually entered daily life. An advanced driver assistant system (advanced driving assistant system, ADAS) plays a very important role in the intelligent vehicle. In the system, various sensors installed on the vehicle are used to sense an ambient environment and collect data in a driving process of the vehicle, to perform object recognition, detection, tracking, and the like, so that a driver becomes aware of possible danger in advance. This effectively improves driving comfort and safety of the vehicle.

In an unmanned driving architecture, a sensor layer includes a vision sensor such as a vehicle-mounted camera and a radar sensor such as a vehicle-mounted radar. A millimeter-wave radar serving as a kind of vehicle-mounted radar has become a main sensor in an unmanned driving system because of lower costs and more mature technologies.

Currently, a radar apparatus uses a fixed resource to periodically send a radar signal, and receive, on a resource for sending the radar signal, a signal reflected from the radar signal in the target object. The signal is also referred to as an echo signal. The radar apparatus may determine location information and speed information of the target object based on the received echo signal and the sent radar signal. This process is also referred to as object detection below.

If two radar apparatuses use a same resource or overlapping resources, the two radar apparatuses interfere with each other. In particular, if two adjacent radar apparatuses send radar signals in a same periodicity, the two radar apparatuses are more likely to interfere with each other. For example, if radar apparatuses installed on adjacent vehicles in a same-direction vehicle flow use completely or partially overlapping resources, the radar apparatuses continuously interfere with each other.

### SUMMARY

This application provides a target detection method and a radar apparatus, to minimize or avoid interference between radars.

According to a first aspect, a target detection method is provided. An execution body of the method may be a first detection apparatus, and the first detection apparatus is, for example, a radar apparatus, or a chip in the first detection apparatus. An example in which the execution body is the radar apparatus is used for description below. The method includes: performing at least one interference interception on a plurality of first time domain resources; and determining a second time-frequency resource in a first time-frequency resource based on a result of the at least one interference interception, where the plurality of first time domain resources are a subset of time domain resources corresponding to the first time-frequency resource, and the first time-frequency resource is a time-frequency resource of the radar apparatus; and any two adjacent first time domain resources in the plurality of first time domain resources have a same time interval, and the interference interception is performed on some of the plurality of first time domain resources.

Specifically, the some first time domain resources are resources other than at least one first time domain resource used for target detection in the plurality of first time domain resources.

The method further includes: performing at least one target detection on the plurality of first time domain resources, where at least one first time domain resource used for the at least one target detection does not overlap the some first time domain resources used for the at least one interference interception; or performing at least one target detection on the plurality of first time domain resources, where at least one first time domain resource used for the at least one target detection overlaps the some first time domain resources used for the at least one interference interception.

In this solution, the plurality of first time domain resources are periodic, that is, a time interval between any two adjacent first time domain resources is the same. The radar apparatus performs target detection on some of the plurality of first time domain resources, and performs interference interception, that is, interference detection on the other first time domain resources. The radar apparatus may predict, based on a result of the interference interception, a degree of interference imposed by another radar apparatus when target detection is performed on some time domain resources (for example, time domain resources similar to the first time domain resource), to determine a second time-frequency resource subsequently used by the radar apparatus for target detection, so as to exclude a time-frequency resource with a relatively high interference degree from the first time-frequency resource as much as possible, and reduce or avoid interference imposed by another radar apparatus when the radar apparatus performs target detection.

In a possible design, the at least one first time domain resource used for target detection includes at least three first time domain resources, and the at least three first time domain resources include a first group of first time domain resources and a second group of first time domain resources; and each group of first time domain resources includes two adjacent first time domain resources, and a time interval between two adjacent first time domain resources in the first group of first time domain resources is different from a time interval between two adjacent first time domain resources in the second group of first time domain resources.

It should be understood that, when the first time domain resource used for target detection includes the at least three first time domain resources, the at least three first time domain resources include the first group of first time domain resources and the second group of first time domain resources. The time interval between two adjacent first time domain resources in the first group of first time domain resources is different from the time interval between two adjacent first time domain resources in the second group of first time domain resources. In other words, the at least three first time domain resources used for target detection are aperiodic. Fewer first time domain resources are selected from the plurality of first time domain resources for interference interception, so that the at least three first time domain resources used for target detection can be aperiodic. Therefore, fewer first time domain resources may not be used for target detection, to ensure target detection performance of the radar apparatus. In addition, this solution can ensure that the result of the interference interception more properly reflects an interference degree of a time domain resource used for target detection.

In a possible design, the method further includes:
performing at least one interference interception on a plurality of second time domain resources, where the plurality of second time domain resources are a subset of time domain resources other than the plurality of first time domain resources in the time domain resources corresponding to the first time-frequency resource, and the at least one interference interception is performed on at least one of the plurality of second time domain resources.

For example, in addition to the first time domain resource used for target detection, the radar apparatus may further perform interference interception on the second time domain resource not used for target detection, so that the radar apparatus can predict whether a time-frequency resource more suitable for target detection exists in available time-frequency resources (for example, the corresponding time domain resource is a time-frequency resource of the second time domain resource), that is, whether a time-frequency resource with a lower interference degree exists in time-frequency resources not currently used for target detection. By using this solution, a more proper time-frequency resource can be selected for target detection.

In a possible design, a first frequency domain resource for performing one target detection overlaps or does not overlap a second frequency domain resource for performing one interference interception.

For example, the first frequency domain resource used for target detection may overlap the second frequency domain resource used for interference interception. In this way, an interference degree of a frequency domain resource currently used for target detection may be predicted through interference interception. The first frequency domain resource used for target detection may not overlap the second frequency domain resource used for interference interception. In this way, an interference degree of a frequency domain resource not currently used for target detection may be predicted through interference interception.

In a possible design, duration of performing each interference interception is less than duration of the first time domain resource.

For example, the radar apparatus performs target detection on a third time-frequency resource, and a time domain resource corresponding to the third time-frequency resource is a first time domain resource. The radar apparatus performs interference interception on a fourth time-frequency resource, and a time domain resource corresponding to the fourth time-frequency resource is a subset of first time domain resources. In this way, the radar apparatus may perform a plurality of interceptions on one first time domain resource, and different interceptions use different frequency domain resources, so that interference degrees of more time-frequency resources can be determined.

In a possible design, one second time domain resource includes M sub-time domain resources, a frequency domain resource corresponding to the first time-frequency resource includes N sub-frequency domain resources, and M and N are mutually prime; and the performing at least one interference interception on a plurality of second time domain resources includes:
performing interference interception on a fifth time-frequency resource, where a time domain resource corresponding to the fifth time-frequency resource is one of the M sub-time domain resources, and a frequency domain resource corresponding to the fifth time-frequency resource is one of the N sub-frequency domain resources.

For example, M and N are mutually prime, so that the radar apparatus can determine interference degrees of maximum time-frequency resources in a shortest period of time.

In a possible design, duration of performing interference interception on a time-frequency resource by the radar apparatus meets at least one of the following possible conditions:
Condition 1: Within first preset duration, interference interception duration is greater than or equal to first duration, which can ensure interference interception performance of the radar apparatus. For example, the radar apparatus performs interference interception on some time-frequency resources. Longer natural interference interception duration indicates better interference interception performance of the radar apparatus. If the interference interception performance of the radar apparatus needs to be at least greater than a specific threshold, corresponding shortest interference interception duration may be the first duration.
Condition 2: Within second preset duration, interference interception duration is less than or equal to second duration, which can ensure target detection performance of the radar apparatus. For example, the radar apparatus performs interference interception on some time-frequency resources. Shorter interference interception duration indicates fewer computing processing resources used for natural interference interception. In contrast, longer target detection duration and more computing processing resources may indicate better target detection performance of the radar apparatus. If the target detection performance of the radar apparatus needs to be at least greater than a specific threshold, corresponding longest interference interception duration may be the second duration.
Condition 3: Within third preset duration, duration used for target detection is less than third duration, which can ensure that more time-frequency resources are intercepted. For example, all time domain resources other than a time domain resource used for target detection in the time domain resources corresponding to the first time-frequency resource are used for interference interception, that is, interference interception is performed on all time domain resources not used for target detection. In this case, the duration used for target detection is less than the third duration, which can ensure that more time-frequency resources are intercepted.
Condition 4: Within fourth preset duration, interference interception duration that meets a preset condition is greater than or equal to fourth duration, which can ensure interference interception performance of the radar apparatus for a specific-type resource. For example, the preset condition may be that a frequency domain resource corresponding to a time-frequency resource used for interference interception is a subset of frequency domain resources corresponding to a time-frequency resource used for target detection, to ensure that the radar apparatus performs sufficient interference interception on a frequency domain resource that may be currently used for target detection. This ensures interference interception performance for the frequency domain resource that can be used for target detection.
Condition 5: Within fifth preset duration, interference interception duration that meets a preset condition is greater than or equal to fifth duration, which can ensure interference interception performance of the radar apparatus for a specific-type resource. For example, the preset condition may be that a frequency domain resource corresponding to a time-frequency resource used for interference interception partially overlaps or does not overlap a frequency domain resource corresponding to a time-frequency resource used for target detection, to ensure that the radar apparatus performs sufficient interference interception on a frequency domain resource not used for target detection. This ensures interference interception performance for the frequency domain resource not used for target detection.
Condition 6: Within sixth preset duration, interference interception duration that meets a preset condition is greater than or equal to sixth duration, which can ensure interference interception performance of the radar apparatus for a specific-type resource. For example, the preset condition may be that a time domain resource corresponding to a time-frequency resource used for interference interception is a subset of the first time domain resources, to ensure that the radar apparatus performs sufficient interference interception on a time domain resource currently used for target detection. This ensures interference interception performance of the radar apparatus for the time domain resource currently used for target detection.
Condition 7: Within seventh preset duration, interference interception duration that meets a preset condition is greater than or equal to seventh duration, which can ensure interference interception performance of the radar apparatus for a specific-type resource. For example, the preset condition may be that a time domain resource corresponding to a time-frequency resource used for interference interception is a subset of the time domain resources corresponding to the first time-frequency resource, to ensure that the radar apparatus performs sufficient interference interception on a time domain resource used for target detection. This ensures interference interception performance of the radar apparatus for the time domain resource used for target detection.

It should be noted that the first preset duration to the seventh preset duration are seven pieces of preset duration in total, and may be the same or different. The preset conditions in the condition 4 to the condition 7 may alternatively be any combination of the preset conditions respectively corresponding to the condition 4 to the condition 7.

In a possible design, the performing at least one interference interception includes:
determining power, energy, or spectral density of a signal received on the some first time domain resources used for the at least one interference interception; or
receiving indication information on a sixth time-frequency resource, where the indication information indicates a seventh time-frequency resource used by a second detection apparatus to perform target detection, and determining power, energy, or spectral density of a signal received on the seventh time-frequency resource.

In embodiments of this application, performing interference interception on a time-frequency resource is determining strength of a signal received on the time-frequency resource, for example, obtaining power, energy, or spectral density of the signal, or another possible parameter used to represent the strength of the signal. Alternatively, performing interference interception on a time-frequency resource is receiving, on another time-frequency resource, indication information indicating the time-frequency resource, and determining strength of a signal received on the time-frequency resource. For example, considering an application scenario, the radar apparatus may send a signal used for target detection on a specific resource, or may send indication information on the resource, to indicate a time-frequency resource used by the radar apparatus for target detection. Characteristics of radar signals sent by different radar apparatuses for target detection may be different. Therefore, if the different radar apparatuses do not know the characteristics of the radar signals sent by each other for target detection, the radar apparatus has difficult in directly intercepting the time-frequency resource, and even cannot determine the strength of the signal received on the time-frequency resource indicated by the indication information. By using this solution, a plurality of radar apparatuses may pre-agree on a form, a parameter, a resource, or the like of a signal that carries indication information. In this way, it is easy to receive indication information sent by the plurality of radar apparatuses to each other, and it is easy to intercept the indication information to predict strength of a signal received on a resource indicated by the indication information. This reduces interference interception difficulty.

In a possible design, the receiving indication information on a sixth time-frequency resource, where the indication information indicates a seventh time-frequency resource used by a second detection apparatus to perform target detection, and determining power, energy, or spectral density of a signal received on the seventh time-frequency resource includes:
receiving the signal on the seventh time-frequency resource, and determining the power, energy, or spectral density of the received signal; or
determining, based on power, energy, or spectral density of a signal received on the sixth time-frequency resource, the power, energy, or spectral density of the signal received on the seventh time-frequency resource.

In embodiments of this application, the signal received on the seventh time-frequency resource may be directly measured. For example, the indication information may indicate another parameter for sending a radar signal on the seventh time-frequency resource by the radar apparatus, for example, a pulse width, a pulse repetition interval, or a frequency modulation slope of the radar signal. Therefore, after receiving the indication information, the radar apparatus may directly measure the received signal on the seventh time-frequency resource. Alternatively, the power, energy, or spectral density of the signal received on the sixth time-frequency resource is obtained, to predict the power, energy, or spectral density of the signal received on the seventh time-frequency resource, that is, the power, energy, or spectral density of the signal received on the seventh time-frequency resource is not directly obtained. This reduces detection difficulty, and improves detection efficiency. For example, a plurality of radar apparatuses may pre-agree on a form, a parameter, and a resource of a signal carrying indication information, to ensure that the plurality of radar apparatuses can receive indication information sent by the plurality of radar apparatuses to each other.

In a possible design, the determining a second time-frequency resource in the first time-frequency resource based on a result of the at least one interference interception includes:
determining an interference degree of a ninth time-frequency resource based on an interception result of an eighth time-frequency resource in the first time-frequency resource, or determining an interference degree of a ninth time-frequency resource based on interception results of a plurality of eighth time-frequency resources in the first time-frequency resource, where a first correspondence exists between the eighth time-frequency resource and the ninth time-frequency resource; and
determining the second time-frequency resource based on the interference degree of the ninth time-frequency resource, where the second time-frequency resource includes at least one ninth time-frequency resource, or the second time-frequency resource does not include the ninth time-frequency resource.

In embodiments of this application, the second time-frequency resource used for target detection is determined from the first time-frequency resource based on the interception result of the intercepted eighth time-frequency resource. For example, the interference degree of the ninth time-frequency resource may be determined based on the interception result of the intercepted eighth time-frequency resource, and then the second time-frequency resource is determined based on the interference degree. A correspondence exists between the ninth time-frequency resource and the eighth time-frequency resource. For example, the ninth time-frequency resource and the eighth time-frequency resource are respectively different subsets of periodic time-frequency resources. It should be understood that frequency domain resources corresponding to the periodic time-frequency resources are the same, and corresponding two adjacent time domain resources have a same spacing. If the eighth time-frequency resource is likely to be interfered with, it may be inferred that the ninth time-frequency resource is also likely to be interfered with. If the interference degree of the ninth time-frequency resource is relatively low, the second time-frequency resource used for target detection may be selected from the ninth time-frequency resource. For example, a ninth time-frequency resource with a lowest interference degree is selected as the second time-frequency resource. Alternatively, if the interference degree of the ninth time-frequency resource is relatively high, a time-frequency resource used for target detection may be selected from a time-frequency resource other than the ninth time-frequency resource, to exclude a time-frequency resource that may be interfered with as much as possible.

In a possible design, the determining an interference degree of a ninth time-frequency resource based on interception results of a plurality of eighth time-frequency resources in the first time-frequency resource includes any one of the following solutions:
Solution 1: Determine the interference degree of the ninth time-frequency resource based on an average value of power, energy, or spectral density of signals received on the plurality of eighth time-frequency resources. By using this solution, the ninth time-frequency resource can be more properly selected.
Solution 2: Determine the interference degree of the ninth time-frequency resource based on a quantity of at least one eighth time-frequency resource whose interference degree is greater than a preset threshold in the plurality of eighth time-frequency resources or a proportion of at least one eighth time-frequency resource whose interference degree is greater than a preset threshold in the plurality of eighth time-frequency resources. If a quantity of time-frequency resources that are interfered with is relatively large, or a proportion of a time-frequency resource that is interfered with in intercepted time-frequency resources is relatively large, it may be considered that a time-frequency resource having a first correspondence with the intercepted time-frequency resource is relatively likely to be interfered with. By using this solution, a time-frequency resource with a relatively high interference degree can be excluded as much as possible.

In a possible design, to reduce or avoid interference from another radar apparatus, the radar apparatus may reselect a time-frequency resource used for target detection. For example, the radar apparatus determines the second time-frequency resource used for target detection when at least one of the following trigger conditions is met:
Trigger condition 1: The ninth time-frequency resource belongs to a resource used for target detection in the first time-frequency resource, and the interference degree of the ninth time-frequency resource is greater than a first threshold.

For example, the ninth time-frequency resource is a resource used by the radar apparatus for target detection. If the radar apparatus determines, after the interference interception, that the interference degree of the ninth time-frequency resource is relatively high, an interference degree generated when the radar apparatus performs target detection on the ninth time-frequency resource is relatively high. In this case, the radar apparatus may re-determine the second time-frequency resource.

Trigger condition 2: The ninth time-frequency resource does not belong to a resource used for target detection in the first time-frequency resource, and the interference degree of the ninth time-frequency resource is less than a second threshold.

For example, the ninth time-frequency resource is not a resource used for target detection. It is determined, based on an interception result, that the interference degree of the ninth time-frequency resource is relatively low, and it can be considered that there is a resource that is more suitable for target detection than a resource currently used for target detection. In this case, the second time-frequency resource can be re-determined.

Trigger condition 3: Duration or a quantity of times of using a first time domain resource for target detection in the plurality of first time domain resources is greater than or equal to a third threshold. In this case, the second time-frequency resource can be re-determined. This solution can ensure that a time-frequency resource used by the radar apparatus for target detection is relatively stable as much as possible, so that another radar apparatus can predict a degree of interference imposed by the radar apparatus when the time-frequency resource is used for target detection. In addition, this solution can further ensure fairness of resource use by various radar apparatuses, to avoid a case in which a specific radar apparatus occupies a high-quality resource for a long period of time, and consequently another radar apparatus cannot use the high-quality resource, but can use only a low-quality resource. It should be understood that the radar apparatus meets the trigger condition 3, and the duration or the quantity of times of using the first time domain resource for target detection is set to 0, that is, the duration or the quantity of times of using the first time domain resource for target detection is calculated from 0, to determine whether the radar apparatus meets the trigger condition 3 next time.

Trigger condition 4: A first value is obtained when duration or a quantity of times of using a first time domain resource for target detection in the plurality of first time domain resources is greater than or equal to a third threshold, and the first value is greater than or equal to a fourth threshold. That is, the trigger condition is that the first value is greater than or equal to the fourth threshold, and the first value may be, for example, randomly generated. This solution ensures fairness of resource use by various radar apparatuses, and can further improve stability of a time-frequency resource used by the radar apparatus to perform target detection, to ensure accuracy of predicting, by another radar apparatus, a degree of interference imposed by the radar apparatus when the time-frequency resource is used for target detection. It should be understood that the radar apparatus meets the trigger condition 4, and the duration or the quantity of times of using the first time domain resource for target detection is set to 0, that is, the duration or the quantity of times of using the first time domain resource for target detection is calculated from 0, to determine whether the radar apparatus meets the trigger condition 4 next time.

Trigger condition 5: A quantity of first time domain resources used by the first detection apparatus is greater than or equal to a fifth threshold. This solution can ensure that a time-frequency resource used by the radar apparatus to perform target detection is relatively stable to a greater extent, so that another radar apparatus can predict an interference degree of the time-frequency resource that may be used for target detection. In addition, this solution can further ensure fairness of resource use by various radar apparatuses, to avoid a case in which a specific radar apparatus occupies a high-quality resource for a long period of time, and consequently another radar apparatus cannot use the high-quality resource, but can use only a low-quality resource. It should be understood that the radar apparatus meets the trigger condition 5, and the accumulated quantity of used first time domain resources is set to 0, that is, after the trigger condition 5 is met, the quantity of used first time domain resources is accumulated from 0, to determine whether the radar apparatus meets the trigger condition 5 next time.

Trigger condition 6: A second value is obtained when a quantity of first time domain resources used by the first detection apparatus is greater than or equal to a fifth threshold, and the trigger condition is that the second value is greater than or equal to a sixth threshold. Similar to the trigger condition 4, the second value may also be randomly generated. This solution ensures fairness of resource use by various radar apparatuses, and can further improve stability of a time-frequency resource used by the radar apparatus to perform target detection, to ensure accuracy of predicting, by another radar apparatus, a degree of interference imposed by the radar apparatus when the time-frequency resource is used for target detection. It should be understood that the radar apparatus meets the trigger condition 6, and the accumulated quantity of used first time domain resources is set to 0, that is, after the trigger condition 6 is met, the quantity of used first time domain resources is accumulated from 0, to determine whether the radar apparatus meets the trigger condition 6 next time.

In a possible design, the method further includes:
updating the third threshold when the first value is greater than or equal to the fourth threshold; or updating the third threshold when the duration or the quantity of times of using the first time domain resource for target detection in the plurality of first time domain resources is greater than or equal to the specified third threshold.

In this solution, the radar apparatus updates duration or a quantity of times of continuously using a time-frequency resource, to ensure that duration or a quantity of times of continuously using a time-frequency resource by different radar apparatuses can be different, that is, ensure that occasions of switching, by different radar apparatuses, time-frequency resources used for target detection are different. This avoids mutual interference as much as possible that is caused when a plurality of radar apparatuses simultaneously switch time-frequency resources used for target detection.

In a possible design, the method further includes:
updating the fifth threshold when the second value is greater than or equal to the sixth threshold; or updating the fifth threshold when the quantity of first time domain resources used by the first detection apparatus is greater than or equal to the specified fifth threshold.

Similarly, updating the fifth threshold may avoid mutual interference as much as possible that is caused when a plurality of radar apparatuses simultaneously switch time-frequency resources used for target detection.

According to a second aspect, a radar apparatus is provided. The radar apparatus may include a transceiver unit and a processing unit.

The transceiver unit is configured to perform at least one interference interception on a plurality of first time domain resources, where the plurality of first time domain resources are a subset of time domain resources corresponding to a first time-frequency resource, and the first time-frequency resource is a time-frequency resource of a first detection apparatus; and any two adjacent first time domain resources in the plurality of first time domain resources have a same time interval, and the interference interception is performed on some of the plurality of first time domain resources.

The processing unit is configured to determine a second time-frequency resource in the first time-frequency resource based on a result of the at least one interference interception, where the second time-frequency resource is used for target detection.

In a possible design, the transceiver unit is further configured to perform at least one target detection on the plurality of first time domain resources, where at least one first time domain resource used for the at least one target detection does not overlap the some first time domain resources used for the at least one interference interception; or at least one time domain resource used for the at least one target detection overlaps the some first time domain resources used for the at least one interference interception.

In a possible design, the at least one first time domain resource used for target detection includes at least three first time domain resources, and the at least three first time domain resources include a first group of first time domain resources and a second group of first time domain resources; and each group of first time domain resources includes two adjacent first time domain resources, and a time interval between two adjacent first time domain resources in the first group of first time domain resources is different from a time interval between two adjacent first time domain resources in the second group of first time domain resources.

In a possible design, the transceiver unit is further configured to:
perform at least one interference interception on a plurality of second time domain resources, where the plurality of second time domain resources are a subset of time domain resources other than the plurality of first time domain resources in the time domain resources corresponding to the first time-frequency resource, and the at least one interference interception is performed on at least one of the plurality of second time domain resources.

In a possible design, duration of performing each interference interception is less than duration of the first time domain resource.

In a possible design, each second time domain resource includes M sub-time domain resources, a frequency domain resource corresponding to the first time-frequency resource includes N sub-frequency domain resources, and M and N are mutually prime; and the transceiver unit is specifically configured to:
perform interference interception on a fifth time-frequency resource, where a time domain resource corresponding to the fifth time-frequency resource is one of the M sub-time domain resources, and a frequency domain resource corresponding to the fifth time-frequency resource is one of the N sub-frequency domain resources.

In a possible design, at least one of the following conditions is met:
within preset duration, accumulated interference interception duration is greater than first duration; or
within preset duration, accumulated interference interception duration is less than second duration; or
within preset duration, duration used for target detection is less than third duration; or
within preset duration, accumulated interference interception duration that meets a preset condition is greater than fourth duration, where the preset condition includes one or a combination of the following conditions:
   a frequency domain resource corresponding to a time-frequency resource used for interference interception is a subset of frequency domain resources corresponding to a time-frequency resource used for target detection; or
   a frequency domain resource corresponding to a time-frequency resource used for interference interception partially overlaps or completely does not overlap a frequency domain resource corresponding to a time-frequency resource used for target detection; or
   a time domain resource corresponding to a time-frequency resource used for interference interception is a subset of the plurality of first time domain resources; or
   a time domain resource corresponding to a time-frequency resource used for interference interception is a subset of the time domain resources corresponding to the first time-frequency resource.

In a possible design, the processing unit is specifically configured to:
determine power, energy, or spectral density of a signal received on the some first time domain resources used for the at least one interference interception; or
receive indication information on a sixth time-frequency resource, where the indication information indicates a seventh time-frequency resource used by a second detection apparatus to perform target detection, and determine power, energy, or spectral density of a signal received on the seventh time-frequency resource.

In a possible design, the processing unit is specifically configured to:
receive the signal on the seventh time-frequency resource, and determine the power, energy, or spectral density of the received signal; or
determine, based on power, energy, or spectral density of a signal received on the sixth time-frequency resource, the power, energy, or spectral density of the signal received on the seventh time-frequency resource.

In a possible design, the processing unit is specifically configured to:
determine an interference degree of a ninth time-frequency resource based on an interception result of an eighth time-frequency resource in the first time-frequency resource, or determine an interference degree of a ninth time-frequency resource based on interception results of a plurality of eighth time-frequency resources in the first time-frequency resource, where a first correspondence exists between the eighth time-frequency resource and the ninth time-frequency resource; and
determine the second time-frequency resource based on the interference degree of the ninth time-frequency resource, where the second time-frequency resource includes at least one ninth time-frequency resource, or the second time-frequency resource does not include the ninth time-frequency resource.

In a possible design, the processing unit is specifically configured to:
determine the interference degree of the ninth time-frequency resource based on an average value of power, energy, or spectral density of signals received on the plurality of eighth time-frequency resources; or
determine the interference degree of the ninth time-frequency resource based on a quantity of at least one eighth time-frequency resource whose interference degree is greater than a preset threshold in the plurality of eighth time-frequency resources or a proportion of at least one eighth time-frequency resource whose interference degree is greater than a preset threshold in the plurality of eighth time-frequency resources.

In a possible design, the processing unit is further configured to:
determine the second time-frequency resource when at least one of the following trigger conditions is met:
the ninth time-frequency resource belongs to a resource used for target detection in the first time-frequency resource, and the interference degree of the ninth time-frequency resource is greater than a first threshold; or
the ninth time-frequency resource does not belong to a resource used for target detection in the first time-frequency resource, and the interference degree of the ninth time-frequency resource is less than a second threshold; or
duration or a quantity of times of using a first time domain resource for target detection in the plurality of first time domain resources is greater than or equal to a third threshold; or
a first value is obtained when duration or a quantity of times of using a first time domain resource for target detection in the plurality of first time domain resources is greater than or equal to a third threshold, and the trigger condition is that the first value is greater than or equal to a fourth threshold; or
a quantity of first time domain resources used by the first detection apparatus is greater than or equal to a fifth threshold; or
a second value is obtained when a quantity of first time domain resources used by the first detection apparatus is greater than or equal to a fifth threshold, and the trigger condition is that the second value is greater than or equal to a sixth threshold.

In a possible design, the processing unit is further configured to:
update the third threshold when the first value is greater than or equal to the fourth threshold; or update the third threshold when the duration or the quantity of times of using the first time domain resource for target detection in the plurality of first time domain resources is greater than or equal to the specified third threshold.

In a possible design, the processing unit is further configured to:
update the fifth threshold when the second value is greater than or equal to the sixth threshold; or update the fifth threshold when the quantity of first time domain resources used by the first detection apparatus is greater than or equal to the specified fifth threshold.

According to a third aspect, a radar apparatus is provided. The radar apparatus includes a processor and a transceiver. Optionally, the transceiver may include a transmitter and a receiver, and the processor, the transmitter, and the receiver are coupled to each other, to implement the method described in the first aspect or any possible design of the first aspect. For example, the radar apparatus is a chip disposed in a detection device. For example, the radar apparatus is a radar. The transmitter and the receiver are implemented, for example, by an antenna, a feeder, and a codec in a communications device. Alternatively, if the radar apparatus is the chip disposed in the detection device, the transmitter and the receiver each are, for example, a communications interface in the chip. The communications interface is connected to a radio frequency transceiver component in the detection device, to implement information receiving and sending by using the radio frequency transceiver component.

The transceiver is configured to perform at least one interference interception on a plurality of first time domain resources, where the plurality of first time domain resources are a subset of time domain resources corresponding to a first time-frequency resource, and the first time-frequency resource is a time-frequency resource of a first detection apparatus; and any two adjacent first time domain resources in the plurality of first time domain resources have a same time interval, and the interference interception is performed on some of the plurality of first time domain resources.

The processor is configured to determine a second time-frequency resource in the first time-frequency resource based on a result of the at least one interference interception, where the second time-frequency resource is used for target detection.

In a possible design, the transceiver is further configured to perform at least one target detection on the plurality of first time domain resources, where at least one first time domain resource used for the at least one target detection does not overlap the some first time domain resources used for the at least one interference interception.

In a possible design, the at least one first time domain resource used for target detection includes at least three first time domain resources, and the at least three first time domain resources include a first group of first time domain resources and a second group of first time domain resources; and each group of first time domain resources includes two adjacent first time domain resources, and a time interval between two adjacent first time domain resources in the first group of first time domain resources is different from a time interval between two adjacent first time domain resources in the second group of first time domain resources.

In a possible design, the transceiver is further configured to:
perform at least one interference interception on a plurality of second time domain resources, where the plurality of second time domain resources are a subset of time domain resources other than the plurality of first time domain resources in the time domain resources corresponding to the first time-frequency resource, and the at least one interference interception is performed on at least one of the plurality of second time domain resources.

In a possible design, duration of performing each interference interception is less than duration of the first time domain resource.

In a possible design, each second time domain resource includes M sub-time domain resources, a frequency domain resource corresponding to the first time-frequency resource includes N sub-frequency domain resources, and M and N are mutually prime; and the transceiver is specifically configured to:
perform interference interception on a fifth time-frequency resource, where a time domain resource corresponding to the fifth time-frequency resource is one of the M sub-time domain resources, and a frequency domain resource corresponding to the fifth time-frequency resource is one of the N sub-frequency domain resources.

In a possible design, at least one of the following conditions is met:
within preset duration, accumulated interference interception duration is greater than first duration; or
within preset duration, accumulated interference interception duration is less than second duration; or
within preset duration, duration used for target detection is less than third duration; or
within preset duration, accumulated interference interception duration that meets a preset condition is greater than fourth duration, where the preset condition includes one or a combination of the following conditions:
   a frequency domain resource corresponding to a time-frequency resource used for interference interception is a subset of frequency domain resources corresponding to a time-frequency resource used for target detection; or
   a frequency domain resource corresponding to a time-frequency resource used for interference interception partially overlaps or completely does not overlap a frequency domain resource corresponding to a time-frequency resource used for target detection; or
   a time domain resource corresponding to a time-frequency resource used for interference interception is a subset of the plurality of first time domain resources; or
   a time domain resource corresponding to a time-frequency resource used for interference interception is a subset of the time domain resources corresponding to the first time-frequency resource.

In a possible design, the processor is specifically configured to:
determine power, energy, or spectral density of a signal received on a resource; or
receive indication information on a sixth time-frequency resource, where the indication information indicates a resource used by a second detection apparatus to perform target detection, and determine power, energy, or spectral density of a signal received on the resource.

In a possible design, the processor is specifically configured to:
determine power, energy, or spectral density of a signal received on the some first time domain resources used for the at least one interference interception; or
receive indication information on a sixth time-frequency resource, where the indication information indicates a seventh time-frequency resource used by a second detection apparatus to perform target detection, and determine power, energy, or spectral density of a signal received on the seventh time-frequency resource.

In a possible design, the processor is specifically configured to:
receive the signal on the seventh time-frequency resource, and determine the power, energy, or spectral density of the received signal; or
determine, based on power, energy, or spectral density of a signal received on the sixth time-frequency resource, the power, energy, or spectral density of the signal received on the seventh time-frequency resource.

In a possible design, the processor is specifically configured to:
determine an interference degree of a ninth time-frequency resource based on an interception result of an eighth time-frequency resource in the first time-frequency resource, or determine an interference degree of a ninth time-frequency resource based on interception results of a plurality of eighth time-frequency resources in the first time-frequency resource, where a first correspondence exists between the eighth time-frequency resource and the ninth time-frequency resource; and
determine the second time-frequency resource based on the interference degree of the ninth time-frequency resource, where the second time-frequency resource includes at least one ninth time-frequency resource, or the second time-frequency resource does not include the ninth time-frequency resource.

In a possible design, the processor is specifically configured to:
determine the interference degree of the ninth time-frequency resource based on an average value of power, energy, or spectral density of signals received on the plurality of eighth time-frequency resources; or
determine the interference degree of the ninth time-frequency resource based on a quantity of at least one eighth time-frequency resource whose interference degree is greater than a preset threshold in the plurality of eighth time-frequency resources or a proportion of at least one eighth time-frequency resource whose interference degree is greater than a preset threshold in the plurality of eighth time-frequency resources.

In a possible design, the processor is further configured to:
determine the second time-frequency resource when at least one of the following trigger conditions is met:
the ninth time-frequency resource belongs to a resource used for target detection in the first time-frequency resource, and the interference degree of the ninth time-frequency resource is greater than a first threshold; or
the ninth time-frequency resource does not belong to a resource used for target detection in the first time-frequency resource, and the interference degree of the ninth time-frequency resource is less than a second threshold; or
duration or a quantity of times of using a first time domain resource for target detection in the plurality of first time domain resources is greater than or equal to a third threshold; or
a first value is obtained when duration or a quantity of times of using a first time domain resource for target detection in the plurality of first time domain resources is greater than or equal to a third threshold, and the trigger condition is that the first value is greater than or equal to a fourth threshold; or
a quantity of first time domain resources used by the first detection apparatus is greater than or equal to a fifth threshold; or
a second value is obtained when a quantity of first time domain resources used by the first detection apparatus is greater than or equal to a fifth threshold, and the trigger condition is that the second value is greater than or equal to a sixth threshold.

In a possible design, the processor is further configured to:
update the third threshold when the first value is greater than or equal to the fourth threshold; or update the third threshold when the duration or the quantity of times of using the first time domain resource for target detection in the plurality of first time domain resources is greater than or equal to the specified third threshold.

In a possible design, the processor is further configured to:
update the fifth threshold when the second value is greater than or equal to the sixth threshold; or update the fifth threshold when the quantity of first time domain resources used by the first detection apparatus is greater than or equal to the specified fifth threshold.

According to a fourth aspect, another apparatus is provided. The apparatus may be an apparatus in the foregoing method design. For example, the apparatus is a chip disposed in a detection device. For example, the detection device is a radar. The apparatus includes: a memory, configured to store computer-executable program code; and a processor, where the processor is coupled to the memory. The program code stored in the memory includes instructions. When the processor executes the instructions, the apparatus or a device on which the apparatus is installed is enabled to perform the method in the first aspect or any possible implementation of the first aspect.

The apparatus may further include a communications interface. The communications interface may be a transceiver in the detection device, and is implemented, for example, by an antenna, a feeder, and a codec in the radar apparatus. Alternatively, if the apparatus is the chip disposed in the detection device, the communications interface may be an input/output interface of the chip, for example, an input/output pin.

According to a fifth aspect, a communications system is provided. The communications system may include, for example, one or more of the apparatuses in the third aspect or the fourth aspect, or the communications system may include a target object.

According to a sixth aspect, a computer storage medium is provided. The computer-readable storage medium stores instructions, and when the instructions run on a computer, the computer is enabled to perform the method in the first aspect or any possible design of the first aspect.

According to a seventh aspect, a computer program product including instructions is provided. The computer program product stores the instructions, and when the computer program product is run on a computer, the computer is enabled to perform the method in the first aspect or any possible design of the first aspect.

For beneficial effects of the second aspect to the seventh aspect and the implementations thereof, refer to descriptions of beneficial effects of the method and the implementations thereof in the first aspect.

### BRIEF DESCRIPTION OF DRAWINGS

FIG. 1 shows an application scenario according to an embodiment of this application;
FIG. 2 is a schematic flowchart of a target detection method according to an embodiment of this application;
FIG. 3 is a schematic diagram of an example of a first time-frequency resource according to an embodiment of this application;
FIG. 4 is a schematic diagram of an example of a first time domain resource according to an embodiment of this application;
FIG. 5 is a schematic diagram of an example of a first time domain resource according to an embodiment of this application;
FIG. 6 is a schematic diagram of an example of a second time domain resource according to an embodiment of this application;
FIG. 7 is a schematic diagram of an example of a first time-frequency resource according to an embodiment of this application;
FIG. 8 is a schematic diagram of a structure of a radar apparatus according to an embodiment of this application;
FIG. 9 is another schematic diagram of a structure of a radar apparatus according to an embodiment of this application; and
FIG. 10 is still another schematic diagram of a structure of a radar apparatus according to an embodiment of this application.

### DESCRIPTION OF EMBODIMENTS

To make the objectives, technical solutions, and advantages of embodiments of this application clearer, the following further describes embodiments of this application in detail with reference to the accompanying drawings.

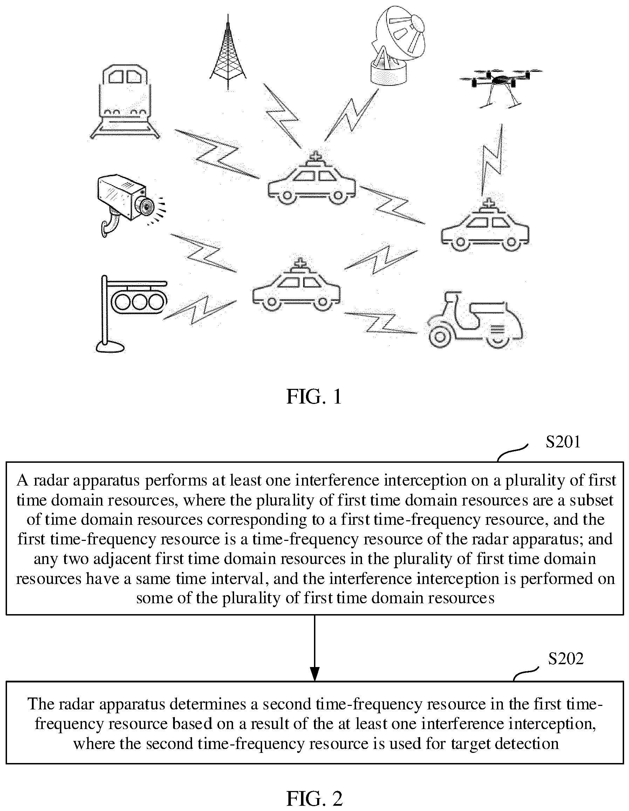

FIG. 1 is a schematic diagram of a possible application scenario according to an embodiment of this application. The foregoing application scenario may be unmanned driving, autonomous driving, intelligent driving, networked driving, or the like. A radar apparatus may be installed on a motor vehicle (for example, an unmanned vehicle, an intelligent vehicle, an electric vehicle, or a digital vehicle), an unmanned aerial vehicle, a railcar, a bicycle, a signal light, a speed measurement apparatus, a network device (for example, a base station or a terminal device in various systems), or the like. Embodiments of this application are not only applicable to a radar apparatus between vehicles, but also applicable to a radar apparatus between a vehicle and another apparatus such as an unmanned aerial vehicle, or a radar apparatus between other apparatuses. In addition, the radar apparatus may be installed on a mobile device, for example, installed on a vehicle as a vehicle-mounted radar apparatus, or may be installed on a fixed device, for example, installed on a device such as a road side unit (road side unit, RSU). An installation location, a function, and the like of the radar apparatus are not limited in embodiments of this application.

It should be understood that a radar or a radar apparatus may also be referred to as a detector, a radar apparatus, a radar signal sending apparatus, or the like. A working principle of the radar is to send a signal (or referred to as a detection signal) and receive a signal reflected from the sent signal in a target object, to detect the corresponding target object. The signal sent by the radar may be a radar signal. Correspondingly, the received signal reflected in the target object may also be a radar signal.

For example, the radar apparatus may be applied to an ADAS, and the ADAS uses the radar apparatus to sense an environment around the vehicle, to provide assistance such as blind spot monitoring, lane change assistance, collision warning, and adaptive cruise control. A millimeter-wave radar is a kind of radar apparatus, which is widely used in autonomous driving of the vehicle. The millimeter-wave radar is usually configured with a MIMO antenna, and obtains angle information of a surrounding object by using a direction of arrival (direction-of-arrival, DOA) estimation method. In the DOA estimation method, angle information of an object relative to the radar apparatus is determined by using a spatial propagation delay difference between the object and each antenna array element. If the radar apparatus determines a distance and an angle between a surrounding object and the radar apparatus, the radar apparatus may know a location of the surrounding object, to implement assistance such as blind spot monitoring, lane change assistance, collision warning, and adaptive cruise control.

If two radar apparatuses use a same resource or overlapping resources, the two radar apparatuses interfere with each other. For example, in the scenario shown in FIG. 1, if radar apparatuses installed on adjacent vehicles in a same-direction vehicle flow use completely or partially overlapping resources, the radar apparatuses continuously interfere with each other.

To resolve the foregoing problem, in embodiments of this application, before performing target detection, the radar apparatus may perform interference detection on a resource currently used by the radar apparatus or a resource available to the radar apparatus. It should be noted that, relative to target detection, interference detection means that a radar apparatus receives a signal and information or detects energy on a specific resource, and determines, based on the received signal and information or the detected energy, a degree of interference imposed by another radar apparatus when the radar apparatus performs target detection on the resource. Therefore, the radar apparatus may reselect a resource used for target detection from available resources based on the determined degree of interference imposed when the radar apparatus performs target detection on the resource, to exclude or avoid interference from another radar apparatus as much as possible, that is, exclude a resource with a relatively high interference degree from the available resources for target detection. For ease of description, degrees of interference imposed when the radar apparatus performs target detection on some resources are referred to as interference degrees of some resources below.

In a possible solution, an embodiment of this application provides a target detection method. FIG. 2 is a flowchart of the method. The method provided in the embodiment shown in FIG. 2 may be performed by a detection apparatus, for example, a radar apparatus. The radar apparatus may be a radar, or a chip or an integrated circuit inside the radar, or a communications apparatus communicatively connected to the radar. In addition, in the following description, each signal sent by a radar detection apparatus may be a radar signal, and a received echo signal may also be a radar signal.

S201: The radar apparatus performs at least one interference interception on a plurality of first time domain resources, where the plurality of first time domain resources are a subset of time domain resources corresponding to a first time-frequency resource, and the first time-frequency resource is a time-frequency resource of the radar apparatus; and any two adjacent first time domain resources in the plurality of first time domain resources have a same time interval, and the at least one interference interception is performed on some of the plurality of first time-frequency resources.

Duration occupied by the first time-frequency resource in time domain may be considered as duration from the start of the work of the radar apparatus to the end of the work of the radar apparatus, and/or a frequency domain resource corresponding to the first time-frequency resource may be a resource that can be supported within a capability range of the radar apparatus. For example, a supported bandwidth within the capability range of the radar apparatus is a 2G bandwidth. In this case, the frequency domain resource corresponding to the first time-frequency resource may be a 2G bandwidth resource. Alternatively, the frequency domain resource corresponding to the first time-frequency resource may be a predetermined available resource of the radar apparatus. For example, the radar apparatus may support a 2G bandwidth within the capability range, but a frequency domain resource that the radar apparatus can actually use may be a predetermined portion of the 2G bandwidth. In this case, the frequency domain resource corresponding to the first time-frequency resource may be this portion of the bandwidth. Alternatively, the frequency domain resource corresponding to the first time-frequency resource may be an intersection of resources that can be used within the capability range of the radar apparatus and available resources predetermined for the radar apparatus. For example, the radar apparatus may support a bandwidth of 75 GHz to 79 GHz within the capability range, but a predetermined frequency domain resource that the radar apparatus can actually use is a bandwidth of 78 GHz to 79 GHz. In this case, the frequency domain resource corresponding to the first time-frequency resource is 78 GHz to 79 GHz.

The radar apparatus may perform target detection on the first time-frequency resource, which may be understood as that the radar apparatus sends a radar signal on the first time-frequency resource, receives an echo signal of the radar signal, and determines information such as a distance, an angle, and a speed of a target object based on the radar signal and the echo signal.

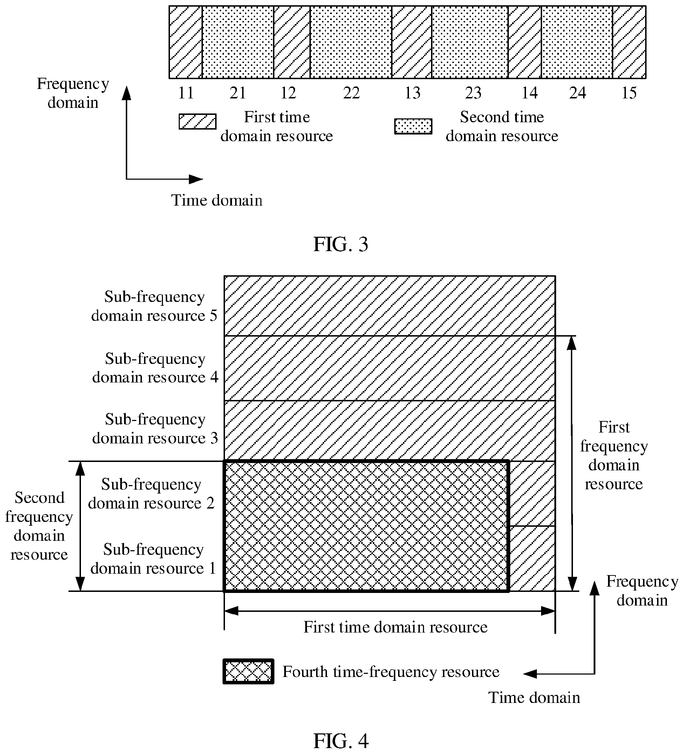

Currently, the radar apparatus periodically sends a radar signal on the first time-frequency resource. For example, FIG. 3 provides an example of the first time-frequency resource. Time domain resources corresponding to the first time-frequency resource include a plurality of first time domain resources and a plurality of second time domain resources, and any two adjacent first time domain resources have a same time interval. That is, the first time domain resources are periodic resources, and similarly, the second time domain resources are also periodic resources. The radar apparatus periodically sends a radar signal used for target detection on the first time-frequency resource, that is, the radar apparatus sends a radar signal on the plurality of first time domain resources, but does not transmit a radar signal used for target detection on any second time domain resource. For example, the second time domain resource may be idle. It should be understood that each first time domain resource and each second time domain resource are consecutive in time domain, different first time domain resources are inconsecutive in time domain, and different second time domain resources are also inconsecutive in time domain.

Currently, the radar apparatus performs target detection on all the first time domain resources, without considering interference from another radar apparatus. However, there may be actually a plurality of radar apparatuses adjacent to the radar apparatus, and time-frequency resources used by the radar apparatus may completely or partially overlap time-frequency resources used by the plurality of radar apparatuses. If a periodicity of performing target detection by the plurality of radar apparatuses is the same as a periodicity of performing target detection by the radar apparatus, the plurality of radar apparatuses are likely to interfere with each other.

In view of this, in a process of performing target detection in this embodiment of this application, target detection is performed on some of a plurality of first time domain resources currently used for target detection, and interference interception is performed on the other first time domain resources. An interference degree of a candidate resource used by the radar apparatus for target detection is predicted based on a result of the interference interception, that is, the degree of interference imposed by another radar apparatus when the candidate resource is used for target detection. It should be understood that the candidate resource is a subsequent available time-frequency resource of the radar apparatus, and has a same characteristic as a time-frequency resource used for target detection. For example, a time domain resource corresponding to the candidate resource is a subset of the time domain resources corresponding to the first time-frequency resource. In this manner, the radar apparatus may exclude a time-frequency resource with a relatively high interference degree from the candidate resource used for target detection, to reduce or avoid interference between a plurality of radar apparatuses.

For example, the radar apparatus may perform target detection on at least one of the plurality of first time domain resources, and perform interference interception on a first time domain resource other than the at least one first time domain resource in the plurality of first time domain resources.

For ease of understanding, the example in FIG. 3 is still used, and the plurality of first time domain resources are sequentially numbered 11 to 15. In the conventional technology, the radar apparatus performs target detection on the five first time domain resources numbered 11 to 15. However, in this embodiment of this application, the radar apparatus may perform target detection on the three first time domain resources numbered 11, 13, and 14, and perform interference interception on the two first time domain resources numbered 12 and 15. Alternatively, the radar apparatus may perform target detection on, for example, the three first time domain resources numbered 11 to 13, and perform interference interception on the two first time domain resources numbered 14 and 15. In other words, compared with the conventional technology, in the conventional technology, the radar apparatus does not perform target detection on some time domain resources used for target detection, but performs interference interception. It should be noted that a specific first time domain resource on which interception is performed is not limited in this embodiment of this application.

It should be understood that, to more accurately predict an interference degree of a candidate resource used by the radar apparatus for target detection, in this embodiment of this application, at least interference interception may be performed on a first time domain resource other than the at least one first time domain resource in the plurality of first time domain resources. The at least one first time domain resource used for each of the at least one interference interception may have different numbers or a same number.

Further, the at least one first time domain resource used for target detection is an aperiodic resource. To be specific, if the at least one first time domain resource includes at least three first time domain resources, there are at least two different time intervals among the at least three first time domain resources. One time interval is a time interval between two adjacent first time domain resources, and the other time interval is a time interval between two other adjacent first time domain resources.

For example, still as shown in FIG. 3, there are five first time domain resources, and any two adjacent first time domain resources in the five first time domain resources have a same time interval. In a possible scenario, the radar apparatus selects the first time domain resources numbered 11, 13, and 15 for target detection, and selects the first time domain resources numbered 12 and 14 for interference interception. To be specific, resources used for target detection are periodic resources, target detection is performed on a first time domain resource in an odd-numbered periodicity, and interference interception is performed on a first time domain resource in an even-numbered periodicity. It should be understood that, in this scenario, an interference interception result reflects an interference degree of a resource similar to a time domain resource in an even-numbered periodicity, and cannot better reflect an interference degree of a resource similar to a time domain resource in an odd-numbered periodicity, that is, cannot better reflect an interference degree of a resource used for target detection. In this embodiment of this application, the at least one first time domain resource used for target detection is an aperiodic resource, so that the foregoing scenario can be avoided. This ensures that an interference interception result can more accurately reflect an interference degree of a resource used for target detection.

For example, in this embodiment of this application, three first time domain resources are selected from the five first time domain resources for target detection. For example, the first time domain resources numbered 11, 13, and 14 are selected for target detection, and the first time domain resources numbered 12 and 15 are used for interference interception. The three first time domain resources selected by the radar apparatus are aperiodic resources, that is, a time interval between the two first time domain resources numbered 11 and 13 is different from a time interval between the two first time domain resources numbered 13 and 14. In this embodiment of this application, any one of the plurality of first time domain resources is selected for interference interception, so that the at least three first time domain resources used for target detection can be aperiodic. Therefore, by using this solution, fewer first time domain resources may not be used for target detection, to ensure target detection performance of the radar apparatus as much as possible.

In this embodiment of this application, in addition to the first time domain resource, the radar apparatus may further perform interference interception on a time domain resource other than the first time domain resource in the time domain resources corresponding to the first time-frequency resource. In other words, the radar apparatus may further perform interference interception on the plurality of second time domain resources. In this way, the radar apparatus may predict an interference degree of a time-frequency resource corresponding to a time domain resource currently used for target detection and an interference degree of a time-frequency resource corresponding to a time domain resource not currently used for target detection, to more properly select a resource used for target detection. For example, it may be predicted whether a second time domain resource not used for target detection is more suitable for target detection subsequently, that is, whether an interference degree of the second time domain resource not used for target detection is lower. If the interference degree is lower, the second time domain resource is more suitable for target detection.

It should be understood that, to more accurately predict an interference degree of a candidate resource used by the radar apparatus for target detection, the radar apparatus may alternatively perform at least one interference interception on the plurality of second time domain resources. It should be noted that the plurality of second time domain resources may be a subset of time domain resources other than the plurality of first time domain resources in the time domain resources corresponding to the first time-frequency resource. The radar apparatus may perform interference interception on at least one of the plurality of second time domain resources.

For example, the example in FIG. 3 is still used, and the plurality of second time domain resources are sequentially numbered 21 to 24. In the conventional technology, the radar apparatus does not perform target detection on the four second time domain resources numbered 21 to 24. For example, the four second time domain resources may be idle. However, in this embodiment of this application, the radar apparatus may perform interference interception on at least one of the four second time domain resources. For example, the radar apparatus may perform interference interception on the four second time domain resources numbered 21 to 24, or may perform interference interception on the second time domain resources numbered 22 and 23, to predict an interference degree of a time domain resource that has a same characteristic as the second time domain resource. It should be noted that a specific second time domain resource on which interception is performed is not limited in this embodiment of this application. It should be understood that, in this embodiment of this application, at least one interference interception is performed on the at least one second time domain resource, and the at least one second time domain resource used for each interception may have a same number or different numbers.

To more accurately predict an interference degree of a candidate resource used by the radar apparatus for target detection, the radar apparatus may perform interference interception on a time-frequency resource with a finer granularity.

Specifically, the radar apparatus may perform interference interception on a frequency domain resource used for target detection, or may perform interference interception on a frequency domain resource not used for target detection, or may perform interference interception on both a frequency domain resource used for target detection and a frequency domain resource not used for target detection. In a possible implementation, a frequency domain resource used by the radar apparatus to perform one target detection may overlap a frequency domain resource used by the radar apparatus to perform one interference interception, or a frequency domain resource used by the radar apparatus to perform one target detection may not overlap a frequency domain resource used by the radar apparatus to perform one interference interception. If the first frequency domain resource used for target detection overlaps the second frequency domain resource used for interference interception, an interference degree of a frequency domain resource currently used for target detection may be predicted. If the first frequency domain resource used for target detection does not overlap the second frequency domain resource used for interference interception, an interference degree of a frequency domain resource not currently used for target detection may be predicted.

For example, the radar apparatus may perform target detection on a third time-frequency resource, and a time domain resource corresponding to the third time-frequency resource is a first time domain resource. It is assumed that the frequency domain resource corresponding to the third time-frequency resource is a first frequency domain resource. In the conventional technology, the first frequency domain resource is used for target detection. In this embodiment of this application, the radar apparatus may perform interference interception on some frequency domain resources in the first frequency domain resource. In other words, the radar apparatus performs interference interception on a fourth time-frequency resource. A time domain resource corresponding to the fourth time-frequency resource is the same as a time domain resource corresponding to the third time-frequency resource, or a time domain resource corresponding to the fourth time-frequency resource is a subset of time domain resources corresponding to the third time-frequency resource, and a frequency domain resource corresponding to the fourth time-frequency resource is a second frequency domain resource. If the second frequency domain resource overlaps the first frequency domain resource, the radar apparatus performs interference interception on some frequency domain resources in the first frequency domain resource currently used for target detection. If the second frequency domain resource does not overlap the first frequency domain resource, the radar apparatus performs interference interception on a frequency domain resource not used for target detection.

For ease of understanding, for example, FIG. 4 shows an example of the third time-frequency resource. It should be understood that the first frequency domain resource is a subset of frequency domain resources corresponding to the first time-frequency resource. In FIG. 4, a frequency domain resource corresponding to the first time-frequency resource includes five sub-frequency domain resources, the five sub-frequency domain resources are sequentially numbered 1 to 5, and a frequency domain resource corresponding to the third time-frequency resource, that is, the first frequency domain resource, includes the sub-frequency domain resource 1 to the sub-frequency domain resource 4. The sub-frequency domain resource 1 to the sub-frequency domain resource 4 are used for target detection, and the sub-frequency domain resource 5 is not used for target detection. The fourth time-frequency resource may be a subset of the third time-frequency resource. In FIG. 4, an example in which a fourth time domain resource corresponding to the fourth time-frequency resource is a subset of the first time domain resource is used. The second frequency domain resource overlaps the first frequency domain resource. For example, the second frequency domain resource may be the sub-frequency domain resource 1 and the sub-frequency domain resource 2 (this is used as an example in FIG. 4), or may be the sub-frequency domain resource 2 and the sub-frequency domain resource 4. Examples are not listed one by one herein. When the second frequency domain resource overlaps the first frequency domain resource, the radar apparatus performs interference interception on some frequency domain resources currently used for target detection.

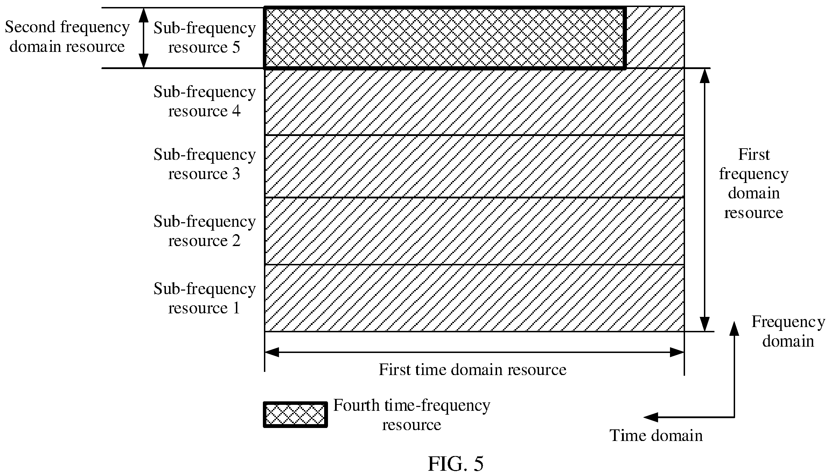

For another example, FIG. 5 shows an example of the third time-frequency resource. Same as FIG. 4, the first frequency domain resource is a subset of frequency domain resources corresponding to the first time-frequency resource. The frequency domain resource corresponding to the first time-frequency resource includes five sub-frequency domain resources, the five sub-frequency domain resources are sequentially numbered 1 to 5, and the first frequency domain resource may include the sub-frequency domain resource 1 to the sub-frequency domain resource 4. The sub-frequency domain resource 1 to the sub-frequency domain resource 4 are used for target detection, and the sub-frequency domain resource 5 is not used for target detection. In FIG. 5, for example, a fourth time domain resource corresponding to the fourth time-frequency resource is also a subset of the first time domain resource. A difference from FIG. 4 lies in that the second frequency domain resource does not overlap the first frequency domain resource, that is, the second frequency domain resource may be the sub-frequency domain resource 5. Because a time domain resource corresponding to the fourth time-frequency resource is a subset of time domain resources corresponding to the third time-frequency resource, the radar apparatus may perform a plurality of interference interceptions on one first time domain resource, and may perform different interference interceptions on different frequency domain resources, so that more frequency domain resources can be traversed, that is, the five sub-frequency domain resources can be traversed, to determine interference degrees of more frequency domain resources.

In contrast, when the radar apparatus performs interference interception on a frequency domain resource not currently used for target detection, it may be considered that the radar apparatus performs interception on a time-frequency resource in which the second time domain resource is located. However, a frequency domain resource used for interception is a subset of the first time-frequency resource, and a time domain resource used for interception is a subset of the second time domain resource. For example, the radar apparatus may perform interference interception on a fifth time-frequency resource. A time domain resource corresponding to the fifth time-frequency resource may be a subset of the second time domain resource, and a frequency domain resource corresponding to the fifth time-frequency resource may be a subset of the first time domain resource. For example, assuming that a second time domain resource includes M sub-time domain resources, and a frequency domain resource corresponding to the first time-frequency resource includes N sub-frequency domain resources, the time domain resource corresponding to the fifth time-frequency resource is one of the M sub-time domain resources, and the frequency domain resource corresponding to the fifth time-frequency resource is one of the N sub-frequency domain resources.

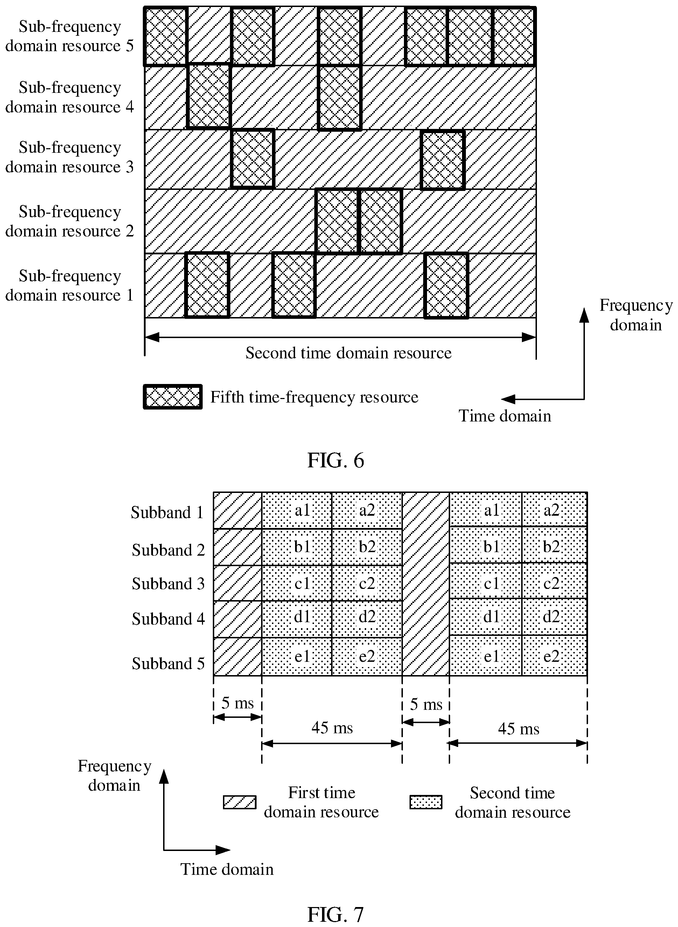

Preferably, M and N are mutually prime, and the radar apparatus may traverse, in a shortest period of time, all time-frequency resources that need to be predicted, to determine interference degrees of maximum time-frequency resources. For example, FIG. 6 shows an example of the second time domain resource. In FIG. 6, for example, the second time domain resource includes nine sub-time domain resources, and the frequency domain resource corresponding to the first time-frequency resource includes five sub-frequency domain resources. It should be noted that FIG. 6 shows only some fifth time-frequency resources. When M and N are mutually prime, the radar apparatus may traverse, in a shortest period of time, a frequency domain resource corresponding to a time-frequency resource in which any second time domain resource is located and all other time domain resources other than the second time domain resource, that is, traverse, in a shortest period of time, all time-frequency resources that need to be predicted.

It should be noted that, in this embodiment of this application, the radar apparatus may perform interference interception on some time domain resources, and may also perform interference interception on some frequency domain resources. Frequency domain resources corresponding to time-frequency resources in which different time domain resources are located may completely or partially overlap. For example, frequency domains corresponding to first time-frequency resources in which different first time domain resources are located may completely or partially overlap. For another example, frequency domain resources corresponding to first time-frequency resources in which different second time domain resources are located may completely or partially overlap. This is not limited in this embodiment of this application.

It should be noted that, in this embodiment of this application, content of interference interception performed by the radar apparatus varies with an application scenario. The following describes interference interception in this embodiment of the present invention with reference to specific scenarios.

In a possible scenario, that the radar apparatus performs interference interception on a time-frequency resource means that the radar apparatus determines strength of a signal received on the time-frequency resource. For example, the radar apparatus may obtain power, energy, or spectral density of the signal received on the time-frequency resource, and determine, based on the obtained power, energy, or spectral density, the strength of the signal received on the time-frequency resource. It should be understood that, in this embodiment of this application, another possible parameter used to represent strength of a signal may also be obtained. This is not limited in this embodiment of this application.

In another possible scenario, considering that the time-frequency resource may be used by another radar apparatus, the another radar apparatus may notify the radar apparatus on another time-frequency resource, and the another radar apparatus uses the time-frequency resource. For ease of description, the following uses a first radar apparatus and a second radar apparatus as an example. For example, the first radar apparatus may use a sixth time-frequency resource, and the second radar apparatus sends indication information on the sixth time-frequency resource. The indication information indicates a time-frequency resource used by the second radar apparatus for target detection, for example, a seventh time-frequency resource. In this case, the first radar apparatus actually needs to perform interference interception on the seventh time-frequency resource, for example, obtain strength of a signal received on the seventh time-frequency resource.

Radar signals sent by different radar apparatuses for target detection may be different, for example, waveform parameters of the radar signals are different. Different radar apparatuses may not know characteristics of radar signals sent by each other, for example, the first radar apparatus and the second radar apparatus do not know characteristics of radar signals sent by each other. If the first radar apparatus has difficulty in directly intercepting the seventh time-frequency resource, and even cannot directly obtain the signal received on the seventh time-frequency resource, the first radar apparatus cannot determine the strength of the signal received on the seventh time-frequency resource.

Therefore, in this embodiment of this application, the first radar apparatus and the second radar apparatus, that is, different radar apparatuses, may agree on a form, a parameter, a resource, or the like of a signal that carries indication information. In this way, the first radar apparatus and the second radar apparatus know a characteristic of indication information sent by each other, to ensure that the first radar apparatus can definitely receive the indication information on the sixth time-frequency resource. In some embodiments, that the first radar apparatus performs interference interception on the seventh time-frequency resource may be that the first radar apparatus receives indication information on the sixth time-frequency resource, and determines strength of a signal received on the seventh resource indicated by the indication information. For example, the first radar apparatus may obtain power, energy, or spectral density of the signal received on the seventh time-frequency resource, and determine, based on the obtained power, energy, or spectral density, the strength of the signal received on the seventh time-frequency resource. The indication information may also indicate a parameter for sending a radar signal on the seventh time-frequency resource by the second radar apparatus, for example, a pulse width, a pulse repetition interval, or a frequency modulation slope of the radar signal. Therefore, after receiving the indication information, the first radar apparatus may directly measure the received signal on the seventh time-frequency resource. This reduces interference interception difficulty.

In some other embodiments, that the first radar apparatus performs interference interception on the seventh time-frequency resource means that the first radar apparatus performs interference interception on the sixth time-frequency resource. For example, the first radar apparatus obtains strength of indication information received on the sixth time-frequency resource, and predicts, based on the strength, strength of a signal received by the first radar apparatus on the seventh time-frequency resource, for example, power, energy, or spectral density, but does not directly obtain the power, energy, or spectral density of the signal received on the seventh time-frequency resource. This can reduce detection difficulty, and improve detection efficiency.

It should be understood that, in some embodiments, performing each interference interception on a time-frequency resource in this embodiment of this application may alternatively be obtaining a combination of at least two of power, energy, and spectral density of a signal received on the time-frequency resource.

In this embodiment of this application, the radar apparatus performs interference interception on the plurality of first time domain resources and/or the plurality of second time domain resources, and may predict, based on an interception result, an interference degree of a subsequently available time-frequency resource of the radar apparatus. If the radar apparatus intercepts a relatively large quantity of time-frequency resources, a requirement for a computing capability of the radar apparatus is relatively high. If the radar apparatus intercepts a relatively small quantity of time-frequency resources, that is, interference interception performance of the radar apparatus is relatively poor, accuracy of determining, by the radar apparatus based on an interception result, interference degrees of some time-frequency resources may be relatively low.

To balance interference interception performance of the radar apparatus and a computing capability of the radar apparatus, in this embodiment of this application, duration of performing interference interception on the first time-frequency resource may be determined. It should be understood that the duration is accumulated duration. For example, the duration may be a sum of duration of intercepting the plurality of first time domain resources by the radar apparatus and duration of intercepting the plurality of second time domain resources by the radar apparatus. Accumulated interference interception duration is also referred to as interference interception duration below.

It should be understood that the interference interception duration may be determined based on the computing capability of the radar apparatus and a requirement for the interference interception performance of the radar apparatus. Further, in consideration of fairness of resource selection by a plurality of radar apparatuses, the interference interception duration may be further determined based on the computing capability of the radar apparatus, the requirement for the interference interception performance of the radar apparatus, and fairness of resource selection by the radar apparatuses. Certainly, the interference interception duration may also be determined based on the requirement for interference interception performance of the radar apparatus and fairness of resource selection by the radar apparatuses. To avoid affecting performance of target detection of the radar apparatus, which is also referred to as target detection performance, the interference interception duration may also be determined based on the target detection performance of the radar apparatus, fairness of resource selection by the radar apparatuses, and the like.

It should be understood that the interference interception duration is relative. For example, when the radar apparatus starts to work, the radar apparatus may perform both target detection and interference interception, and duration before the radar apparatus ends working is uncertain. Therefore, in this embodiment of this application, the interference interception duration is interference interception duration accumulated within preset duration. The preset duration may be, for example, one periodicity in which the radar apparatus performs target detection, or may be a plurality of periodicities in which the radar apparatus performs target detection. Certainly, this is merely an example herein. The preset duration may alternatively be preset duration. For example, the preset duration is 100 ms. The following lists several conditions that the interference interception duration may need to meet in this embodiment of this application.
(1) Within first preset duration, interference interception duration is greater than or equal to a first threshold, to ensure interference interception performance of the radar apparatus as much as possible.
   The first threshold may be determined based on a requirement for interference interception performance of the radar apparatus and fairness of resource selection by radar apparatuses. For example, the radar apparatus performs interference interception on the plurality of first time domain resources and/or the plurality of second time domain resources. Longer natural interference interception duration indicates better interference interception performance of the radar apparatus. If the interference interception performance of the radar apparatus needs to be at least greater than a specific threshold, corresponding shortest interference interception duration is first duration. Therefore, the interference interception duration may be greater than or equal to the first duration. It should be understood that the first duration may be a preset value, for example, a value that is set when the radar apparatus is delivered from a factory. Alternatively, the first duration may be a value defined in a standard, or a value defined or configured in a protocol. Certainly, the first duration may be stored in the radar apparatus.
(2) Within second preset duration, interference interception duration is less than or equal to a second threshold, to ensure target detection performance of the radar apparatus as much as possible.
   The second threshold may be determined based on target detection performance of the radar apparatus and fairness of resource selection by radar apparatuses. For example, interference interception is performed on the plurality of first time domain resources and/or the plurality of second time domain resources. Shorter interference interception duration indicates fewer computing processing resources used for natural interference interception. In contrast, longer target detection duration and more computing processing resources indicate better target detection performance of the radar apparatus. If the target detection performance of the radar apparatus needs to be at least greater than a specific threshold, corresponding longest interference interception duration is second duration. Therefore, the interference interception duration may be less than or equal to the second duration. It should be understood that, similar to the first duration, the second duration may be a preset value, for example, a value that is set when the radar apparatus is delivered from a factory, and may be stored in the radar apparatus. Alternatively, the second duration may be a value defined in a standard, or a value defined or configured in a protocol. The second preset duration may be the same as or different from the first preset duration.
(3) Although the radar apparatus performs interference interception on some time-frequency resources, interference interception performed on some time-frequency resources may have relatively low impact on determining interference degrees of some time-frequency resources, and therefore may be ignored. For example, to ensure that the radar apparatus performs sufficient interference interception on some time-frequency resources currently used for target detection, that is, to ensure that the radar apparatus has sufficient interference interception results on the time-frequency resources, the radar apparatus may accumulate interference interception duration on the time-frequency resources. Even if the radar apparatus also performs interference interception on another time-frequency resource, interference interception duration on the another time-frequency resource is not accumulated.

For example, within third preset duration, the radar apparatus may accumulate only duration of performing interference interception on some frequency domain resources used for target detection. The some frequency domain resources are a subset of frequency domain resources corresponding to a time-frequency resource used for target detection. In other words, a frequency domain resource corresponding to a time-frequency resource used by the radar apparatus to perform interference interception is a subset of the frequency domain resources corresponding to the time-frequency resource used for target detection. In this case, the interference interception duration may be greater than or equal to the third duration, to ensure, as much as possible, that the radar apparatus performs sufficient interference interception on the frequency domain resource used for target detection.

When the frequency domain resource corresponding to the time-frequency resource used for interference interception is a subset of the frequency domain resources corresponding to the time-frequency resource used for target detection, if the interference interception duration is relatively short, it cannot be ensured that sufficient interference interception results are obtained. Consequently, accuracy of determining, for example, an interference degree of an eighth time-frequency resource is relatively low, that is, interference interception performance of the radar apparatus is relatively low. To ensure interference interception performance of the radar apparatus, a minimum value of the interference interception duration may be the third duration. It should be understood that the third duration may be a preset value, for example, a value that is set when the radar apparatus is delivered from a factory, and may be stored in the radar apparatus. Alternatively, the third duration may be a value defined in a standard, or a value defined or configured in a protocol. The third preset duration may be the same as or different from the first preset duration or the second preset duration.

For ease of understanding of determining the interference interception duration, FIG. 7 shows an example of the first time-frequency resource. It should be noted that, in FIG. 7, for example, two periodicities in which the radar apparatus performs target detection are preset duration. In other words, in FIG. 7, for example, two first time domain resources and two second time domain resources are included. Duration corresponding to the first time domain resource is 5 ms, and duration corresponding to the second time domain resource is 45 ms. It should be understood that one periodicity is a sum of duration corresponding to one first time domain resource and duration corresponding to one second time domain resource, that is, 50 ms. For example, each second time domain resource shown in FIG. 7 is divided into two third time domain resources in time domain. The two third time domain resources are respectively a third time domain resource A and a third time domain resource B. It should be understood that duration corresponding to the third time domain resource A and duration corresponding to the third time domain resource B each are 45 ms/2. In FIG. 7, for example, a frequency domain resource corresponding to the first time domain resource includes five sub-frequency domain resources.

It is assumed that a frequency domain resource used for target detection includes the sub-frequency domain resource 1 and the sub-frequency domain resource 2. Time domain resources used by the radar apparatus to perform interference interception are a first time domain resource and a second time domain resource, and a frequency domain resource used for interception includes the sub-frequency domain resource 1 and the sub-frequency domain resource 2 that correspond to a first time-frequency resource to which the first time domain resource belongs, a sub-frequency domain resource a1 corresponding to a first time-frequency resource to which the third time domain resource A belongs, and a sub-frequency domain resource b1 corresponding to the third time domain resource B. In the first periodicity, the sub-frequency domain resource 1 and the sub-frequency domain resource 2 are used for target detection, and cannot be used for interference interception. Therefore, interference interception duration in the two periodicities is a sum of interference interception duration of the radar apparatus in a first periodicity, that is, 45 ms/2 (a1 and b1), and interference interception duration of the radar apparatus in the second periodicity, that is, 5 ms+45 ms/2 (a1 and b1). That is, the interference interception duration is 50 ms in total.

For another example, a difference from the foregoing example lies in that a frequency domain resource used by the radar apparatus to perform interference interception includes the sub-frequency domain resource 1 and the sub-frequency domain resource 2 that correspond to a first time-frequency resource to which the first time domain resource belongs, a sub-frequency domain resource a1 corresponding to a first time-frequency resource to which the third time domain resource A belongs, and a sub-frequency domain resource a2 corresponding to the third time domain resource B. In this case, interference interception duration in the two periodicities is a sum of interference interception duration of the radar apparatus in the first periodicity, that is, 45 ms (a1 and a2), and interference interception duration of the radar apparatus in the second periodicity, that is, 5 ms and 45 ms (a1 and a2). That is, the interference interception duration is 95 ms in total.

For still another example, the sub-frequency domain resource 3 and the sub-frequency domain resource 4 are not used for target detection. A frequency domain resource used by the radar apparatus to perform interference interception includes the sub-frequency domain resource 1 and the sub-frequency domain resource 2 that correspond to a first time-frequency resource to which the first time domain resource belongs, a sub-frequency domain resource c1 corresponding to a first time-frequency resource to which the third time domain resource A belongs, and a sub-frequency domain resource c2 corresponding to the third time domain resource B. Because the sub-frequency domain resource 3 and the sub-frequency domain resource 4 are not used for target detection, even if the radar apparatus performs interference interception on the sub-frequency domain resource c1 and the sub-frequency domain resource c2, the sub-frequency domain resource c1 and the sub-frequency domain resource c2 do not belong to a subset of frequency domain resources used for target detection. Therefore, interference interception duration in the two periodicities is interference interception duration of the radar apparatus in the second periodicity, that is, 5 ms.

(4) Similar to (3), although the radar apparatus performs interference interception on some time-frequency resources, interference interception performed on some time-frequency resources may have relatively low impact on determining, for example, an interference degree of an eighth time-frequency resource used for target detection, and therefore may be ignored. For example, to ensure that the radar apparatus performs sufficient interference interception on some time-frequency resources not currently used for target detection, that is, to ensure that the radar apparatus has sufficient interference interception results on the time-frequency resources, the radar apparatus may accumulate duration of performing interference interception on the frequency domain resources not used for target detection, even if the radar apparatus performs interference on the frequency domain resources used for target detection, the duration of performing interference interception on these frequency domain resources is not accumulated.

For example, within fourth preset duration, the radar apparatus accumulates only duration of performing interference interception on some frequency domain resources not used for target detection. The some frequency domain resources partially overlap or do not overlap a frequency domain resource corresponding to a time-frequency resource used for target detection. In other words, the frequency domain resources corresponding to the time-frequency resource used for interference interception partially overlap or do not overlap the frequency domain resource corresponding to the time-frequency resource used for target detection.

If the duration of interference interception performed by the radar apparatus on the frequency domain resources not currently used for target detection is relatively short, sufficient interference interception results cannot be obtained, and interference interception performance of the radar apparatus is relatively low. Therefore, to ensure interference interception performance of the radar apparatus, a minimum value of the interference interception duration may be fourth duration, to ensure that the radar apparatus performs sufficient interference interception on the frequency domain resources not currently used for target detection. It should be understood that the fourth duration may be a preset value, for example, a value that is set when the radar apparatus is delivered from a factory, and may be stored in the radar apparatus. Alternatively, the fourth duration may be a value defined in a standard, or a value defined or configured in a protocol. The fourth preset duration may be the same as or different from the first preset duration, the second preset duration, or the third preset duration.

For ease of understanding, the example shown in FIG. 7 is still used. It is assumed that a frequency domain resource used for target detection includes the sub-frequency domain resource 1 and the sub-frequency domain resource 2, and a frequency domain resource used for interference interception is the sub-frequency domain resource 3 and the sub-frequency domain resource 4. Time domain resources used by the radar apparatus to perform interference interception are a first time domain resource and a second time domain resource, and a frequency domain resource used for interception includes the sub-frequency domain resource 3 and the sub-frequency domain resource 4 that correspond to a first time-frequency resource to which the first time domain resource belongs, a sub-frequency domain resource a1 corresponding to a first time-frequency resource to which the third time domain resource A belongs, and a sub-frequency domain resource b1 corresponding to the third time domain resource B. In the first periodicity, the sub-frequency domain resource 1 and the sub-frequency domain resource 2 are used for target detection, and cannot be used for interference interception. Therefore, interference interception on the first time domain resource in the first periodicity is not accumulated. Although the sub-frequency domain resource 3 and the sub-frequency domain resource 4 are used for interception in the first periodicity and the second periodicity, the sub-frequency domain resource 3 and the sub-frequency domain resource 4 that are used for interference interception completely do not overlap the sub-frequency domain resource 1 and the sub-frequency domain resource 2. Therefore, interference interception duration in the two periodicities is interference interception duration of the radar apparatus on the first time domain resource in the second periodicity, that is, 5 ms.

For another example, a difference from the foregoing example lies in that time domain resources used by the radar apparatus to perform interference interception are a first time domain resource and a second time domain resource, and a frequency domain resource used for interception includes the sub-frequency domain resource 3 and the sub-frequency domain resource 4 that correspond to a first time-frequency resource to which the first time domain resource belongs, a sub-frequency domain resource d1 corresponding to a first time-frequency resource to which the third time domain resource A belongs, and a sub-frequency domain resource d2 corresponding to the third time domain resource B. In the first periodicity, the sub-frequency domain resource 1 and the sub-frequency domain resource 2 are used for target detection, and cannot be used for interference interception. Therefore, interference interception on the first time domain resource in the first periodicity is not accumulated. Because the sub-frequency domain resource d1 and the sub-frequency domain resource d2 belong to the sub-frequency domain resource 4, interference interception duration in the two periodicities is a sum of interference interception duration of the radar apparatus on the first time domain resource in the second periodicity, that is, 5 ms, interference interception duration of the radar apparatus on the second time domain resource in the first periodicity, that is, 5 ms, and interference interception duration of the radar apparatus on the second time domain resource in the second periodicity, that is, 45 ms. That is, the interference interception duration is 95 ms in total.

For still another example, time domain resources used by the radar apparatus to perform interference interception are a first time domain resource and a second time domain resource, and a frequency domain resource used for interception includes the sub-frequency domain resource 2 and the sub-frequency domain resource 3 that correspond to a first time-frequency resource to which the first time domain resource belongs, a sub-frequency domain resource b1 corresponding to a first time-frequency resource to which the third time domain resource A belongs, and a sub-frequency domain resource c1 corresponding to the third time domain resource A. The sub-frequency domain resource 2 and the sub-frequency domain resource 3 used for interference interception partially overlap the sub-frequency domain resource 1 and the sub-frequency domain resource 2 used for target detection. In this case, interference interception duration in two periodicities is a sum of interception duration on the sub-frequency domain resource 3 in the first periodicity, that is, 5 ms, interception duration on the sub-frequency domain resource c1 in the first periodicity, that is, 45 ms/2, interception duration on the sub-frequency domain resource 3 and the sub-frequency domain resource 2 in the second periodicity, that is, 5 ms, and interception duration on the sub-frequency domain resource c1 and the sub-frequency domain resource b1 in the second periodicity, that is, 45 ms/2.

(5) To ensure that the radar apparatus performs sufficient interference interception on some time domain resources, the radar apparatus may accumulate interference interception duration on the some time domain resources. Even if the radar apparatus performs interception on another time domain resource, duration of performing interference interception on the another time domain resource is not accumulated.

For example, within fifth preset duration, the radar apparatus may accumulate duration of performing interference interception on a time domain resource used for target detection, that is, a time domain resource corresponding to a time-frequency resource used for interference interception is a subset of the first time domain resource. If the accumulated duration of interference interception performed by the radar apparatus on the time domain resource used for target detection is relatively short, interference interception performance of the radar apparatus is relatively poor. Therefore, to ensure the interference interception performance of the radar apparatus, accumulated shortest interference interception duration may be fifth duration. It should be understood that the fifth duration may be a preset value, for example, a value that is set when the radar apparatus is delivered from a factory, and may be stored in the radar apparatus. Alternatively, the fifth duration may be a value defined in a standard, or a value defined or configured in a protocol. The fifth preset duration may be the same as or different from the first preset duration, the second preset duration, the third preset duration, or the fourth preset duration.

For ease of understanding, the example shown in FIG. 7 is still used. It is assumed that a frequency domain resource used for target detection includes the sub-frequency domain resource 1 and the sub-frequency domain resource 2, and a frequency domain resource used for interference interception is the sub-frequency domain resource 3 and the sub-frequency domain resource 4. Time domain resources used by the radar apparatus to perform interference interception are a first time domain resource and a second time domain resource, and a frequency domain resource used for interception includes the sub-frequency domain resource 1 and the sub-frequency domain resource 2 that correspond to a first time-frequency resource to which the first time domain resource belongs, a sub-frequency domain resource a1 corresponding to a first time-frequency resource to which the third time domain resource A belongs, and a sub-frequency domain resource b1 corresponding to the third time domain resource A. In the first periodicity, the sub-frequency domain resource 1 and the sub-frequency domain resource 2 are used for target detection, and cannot be used for interference interception. Therefore, interference interception on the first time domain resource in the first periodicity is not accumulated. In this case, interference interception on a frequency domain resource is not concerned, and interference interception on the sub-frequency domain resource a1 and the sub-frequency domain resource b1 is not accumulated. Therefore, interference interception duration of the radar apparatus in the two periodicities is 5 ms in the second periodicity. It should be understood that, if the radar apparatus performs interception on the sub-frequency domain resource 3 and the sub-frequency domain resource 4, interference interception duration of the radar apparatus in the two periodicities is 0, that is, interference interception duration of the sub-frequency domain resource 3 and the sub-frequency domain resource 4 is not accumulated.

(6) In an application scenario, the radar apparatus has a frequency domain resource switching capability, but cannot switch a time domain resource. In this case, it is more desirable to determine an interference degree of target detection performed on a frequency domain resource. To ensure that the radar apparatus performs sufficient interference interception on some frequency domain resources, interference interception duration that meets a preset condition within sixth preset duration is greater than or equal to sixth duration. For example, the preset condition is that a time domain resource corresponding to a time-frequency resource used for interference interception is a subset of the time domain resources corresponding to the first time-frequency resource.

For example, within the sixth preset duration, the radar apparatus may accumulate the time-frequency resource corresponding to the subset of the time domain resources corresponding to the first time-frequency resource. For example, the example shown in FIG. 7 is still used. It is assumed that a frequency domain resource used for target detection includes the sub-frequency domain resource 1 and the sub-frequency domain resource 2, and a frequency domain resource used for interference interception is the sub-frequency domain resource 3 and the sub-frequency domain resource 4. Time domain resources used by the radar apparatus to perform interference interception are a first time domain resource and a second time domain resource, and a frequency domain resource used for interception includes the sub-frequency domain resource 1 and the sub-frequency domain resource 2 that correspond to a first time-frequency resource to which the first time domain resource belongs, a sub-frequency domain resource a1 corresponding to a first time-frequency resource to which the third time domain resource A belongs, a sub-frequency domain resource b2 corresponding to the third time domain resource B, a sub-frequency domain resource c2 corresponding to a first time-frequency resource to which the third time domain resource B belongs, and a sub-frequency domain resource d2 corresponding to a first time-frequency resource to which the third time domain resource belongs. It is expected that interference interception is performed on more sub-frequency domain resources. It should be understood that interference interception duration of the radar apparatus in the two periodicities is a sum of interception duration of the radar apparatus on the sub-frequency domain resource 3 and the sub-frequency domain resource 4 in the first periodicity, that is, 5 ms, interception duration of the radar apparatus on the sub-frequency domain resources a1 and b2 in the first periodicity, that is, 45 ms, and interception duration of the radar apparatus on the sub-frequency domain resource 3 and the sub-frequency domain resource 4 in the second periodicity, that is, 5 ms, and interception duration of the radar apparatus on the sub-frequency domain resource c2 and the sub-frequency domain resource d2 in the second periodicity, that is, 45 ms/2. That is, the interference interception duration is 55 ms+45 ms/2 in total.

It should be understood that the sixth duration may be a preset value, for example, a value that is set when the radar apparatus is delivered from a factory, and may be stored in the radar apparatus. Alternatively, the sixth duration may be a value defined in a standard, or a value defined or configured in a protocol. Alternatively, the sixth preset duration may be defined in a standard or a protocol. The sixth preset duration may be the same as or different from the first preset duration, the second preset duration, the third preset duration, the fourth preset duration, or the fifth preset duration.

(7) If the radar apparatus performs target detection for a relatively long time, to more accurately determine interference degrees of some time-frequency resources, the radar apparatus performs interference interception in a time other than the time for performing target detection, to ensure that more time-frequency resources are intercepted. That is, all time domain resources other than a time domain resource used for target detection in the time domain resources corresponding to the first time-frequency resource are used for interference interception. To ensure that more time-frequency resources are intercepted, within seventh preset duration, accumulated duration used for target detection needs to be less than or equal to seventh duration. It should be understood that the seventh duration may be a preset value, for example, a value that is set when the radar apparatus is delivered from a factory, and may be stored in the radar apparatus. Alternatively, the seventh duration may be a value defined in a standard, or a value defined or configured in a protocol. Alternatively, the seventh preset duration may be defined in a standard or a protocol. The seventh preset duration may be the same as or different from the first preset duration, the second preset duration, the third preset duration, the fourth preset duration, the fifth preset duration, or the sixth preset duration.

It should be noted that the interference interception duration may alternatively need to meet a combination of a plurality of preset conditions in the foregoing first preset condition to the foregoing seventh preset condition.

S202: The radar apparatus determines a second time-frequency resource in the first time-frequency resource based on a result of the at least one interference interception, where the second time-frequency resource is used for target detection.

The interception result may be considered as a time-frequency resource that is interfered with in interception time-frequency resources. If power, energy, or spectral density of a signal received on a time-frequency resource is greater than a threshold, it may be considered that the time-frequency resource is interfered with. That is, the time-frequency resource is a time-frequency resource that is interfered with. In other words, power, energy, or spectral density of a signal received on a time-frequency resource that is interfered with is greater than a threshold. The threshold may be set when the radar apparatus is delivered from a factory, or may be defined in a standard. This is not limited in this embodiment of this application.

It should be understood that, in this embodiment of this application, interference interception is performed on some time-frequency resources, and interference degrees of other time-frequency resources are predicted based on interference interception results. In this case, some other time-frequency resources and the intercepted time-frequency resources need to have some same characteristics, that is, the some other time-frequency resources and the intercepted time-frequency resources have the foregoing first correspondence. For ease of description, in the following, a time-frequency resource that has been intercepted is referred to as an eighth time-frequency resource, and some other time-frequency resources are referred to as ninth time-frequency resources. In other words, a time-frequency resource whose interference degree needs to be predicted is referred to as a ninth time-frequency resource.

In a possible implementation, the radar apparatus may determine the interference degree of the ninth time-frequency resource of the radar apparatus based on one or more intercepted eighth time-frequency resources in the first time-frequency resource.

For example, the radar apparatus may obtain power, energy, or spectral density of a signal received on one eighth time-frequency resource, to determine an interference degree of the eighth time-frequency resource. If the power, energy, or spectral density of the signal received on the eighth time-frequency resource is greater than a first threshold, it may be determined that the interference degree of the eighth time-frequency resource is relatively high, and it may be determined that the interference degree of the ninth time-frequency resource is also relatively high. Alternatively, the radar apparatus may obtain an average value of power, energy, or spectral density of signals received on a plurality of eighth time-frequency resources, to determine interference degrees of the plurality of eighth time-frequency resources. If the interference degrees of the plurality of eighth time-frequency resources are relatively high, it may be determined that the interference degree of the ninth time-frequency resource is also relatively high.

In another possible implementation, the radar apparatus may determine the interference degree of the ninth time-frequency resource based on a quantity of eighth time-frequency resources that are interfered with in a plurality of intercepted eighth time-frequency resources or a proportion of eighth time-frequency resources that are interfered with in intercepted eighth time-frequency resources.

For example, the radar apparatus may perform interference interception on each of 10 eighth time-frequency resources, that is, obtain power, energy, or spectral density of a signal received on each of the 10 eighth time-frequency resources. If power, energy, or spectral density of a signal received by the radar apparatus on an eighth time-frequency resource is greater than a threshold, the eighth time-frequency resource is an eighth time-frequency resource that is interfered with. If a quantity of eighth time-frequency resources that are interfered with in the 10 intercepted eighth time-frequency resources is relatively large, or a proportion of eighth time-frequency resources that are interfered with in the 10 intercepted eighth time-frequency resources is relatively large, it may be considered that the interference degree of the ninth time-frequency resource is relatively high, that is, the ninth time-frequency resource is likely to be interfered with.

Interception results of different interference interceptions of the radar apparatus, that is, time-frequency resources that are interfered with, may be different. Therefore, in this embodiment of this application, the radar apparatus does not need to determine, after each interference interception, a proportion of eighth time-frequency resources that are interfered with in intercepted eighth time-frequency resources, to reduce a calculation amount of the radar apparatus as much as possible. In a possible implementation, when a quantity of interference interceptions reaches a threshold, the radar apparatus may determine a proportion of eighth time-frequency resources that are interfered with in intercepted eighth time-frequency resources. Alternatively, when a quantity of times that one or more eighth time-frequency resources are interfered with reaches a preset threshold, the radar apparatus may determine a proportion of eighth time-frequency resources that are interfered with in intercepted eighth time-frequency resources. Alternatively, when a quantity of interference interceptions reaches a threshold, and a quantity of times that one or more eighth time-frequency resources are interfered with reaches a preset threshold, the radar apparatus may determine a proportion of eighth time-frequency resources that are interfered with in intercepted eighth time-frequency resources.

After determining the interference degree of the ninth time-frequency resource of the radar apparatus based on the one or more intercepted eighth time-frequency resources in the first time-frequency resource, the radar apparatus may determine, based on the interference degree, the second time-frequency resource used for target detection. In other words, a resource with a relatively high interference degree in candidate resources used by the radar apparatus to perform target detection is excluded, or a resource with a relatively low interference degree is selected, to reduce or avoid interference between radar apparatuses as much as possible. It should be understood that the second time-frequency resource may be a subset of the ninth time-frequency resource, or the second time-frequency resource overlaps or does not overlap the ninth time-frequency resource.

Specifically, the radar apparatus triggers determining of the second time-frequency resource when one or a combination of the following trigger conditions is met. It should be understood that, when the radar apparatus triggers determining of the second time-frequency resource, it may be considered that the radar apparatus meets the trigger condition, generates a trigger instruction, and starts to determine the second time-frequency resource according to the trigger instruction; or it may be considered that the radar apparatus keeps determining the second time-frequency resource before performing target detection until the trigger condition is met, and the radar apparatus re-determines the second time-frequency resource without generating a trigger instruction. That the radar apparatus triggers determining of the second time-frequency resource may also be considered as that the radar apparatus switches a time-frequency resource used for target detection.

In a first example, the ninth time-frequency resource belongs to a resource currently used for target detection in the first time-frequency resource, and the trigger condition may be that the interference degree of the ninth time-frequency resource is, for example, greater than a second threshold. In other words, the interference degree of the ninth time-frequency resource currently used for target detection is greater than or equal to the second threshold, and the radar apparatus may re-determine the second time-frequency resource. For example, the selected second time-frequency resource may not include the ninth time-frequency resource, that is, a time-frequency resource with a relatively high interference degree is excluded as much as possible, to reduce mutual interference between radar apparatuses.

In a second example, the ninth time-frequency resource does not belong to a resource currently used for target detection in the first time-frequency resource, and the trigger condition may be that the interference degree of the ninth time-frequency resource is less than a third threshold. In other words, a time-frequency resource with a relatively low interference degree exists in time-frequency resources not currently used for target detection, that is, there is a time-frequency resource that is more suitable for target detection. In this case, the radar apparatus may re-determine the second time-frequency resource, for example, select the second time-frequency resource from the ninth time-frequency resource, to reduce or avoid interference between radar apparatuses.

It should be understood that the second threshold and the third threshold each may be a preset value, for example, a value that is set when the radar apparatus is delivered from a factory, and may be stored in the radar apparatus. Certainly, the second threshold and the third threshold each may alternatively be a value defined in a standard, or a value defined or configured in a protocol. This is not limited in this embodiment of this application.

In some embodiments, the trigger condition may alternatively be predefined in this embodiment of this application. If the radar apparatus meets the trigger condition, the second time-frequency resource is determined. The predefined trigger condition may include one or a combination of the following:

In a third example, the trigger condition may be that duration or a quantity of times of using the first time domain resource for target detection is greater than or equal to a fourth threshold, that is, the radar apparatus determines that the duration or the quantity of times of using the first time domain resource for target detection is greater than or equal to the fourth threshold.

If the duration or the quantity of times of using the first time domain resource by the radar apparatus is relatively small, that is, the radar apparatus uses a small quantity of first time domain resources, it may be considered that stability of a time domain resource used by the radar apparatus for target detection is relatively poor and is not common. In this case, stability of predicting, by another radar apparatus, a degree of interference imposed by the radar apparatus on some time-frequency resources is relatively poor, or another radar apparatus even cannot predict a degree of interference imposed by the radar apparatus on some time-frequency resources. Therefore, the trigger condition can ensure that a time-frequency resource used by the radar apparatus for target detection is relatively stable, so that another radar apparatus can predict a degree of interference imposed by the radar apparatus when the time-frequency resource is used for target detection. In addition, the trigger condition can further ensure fairness of resource use by various radar apparatuses, to avoid a case in which a specific radar apparatus occupies a high-quality resource for a long period of time, and consequently another radar apparatus cannot use the high-quality resource, but can use only a low-quality resource.

It should be understood that the radar apparatus meets the trigger condition, and in addition to determining a time-frequency resource used by the radar apparatus for target detection, the duration or the quantity of times of using the first time domain resource for target detection is further set to 0, that is, the duration or the quantity of times of using the first time domain resource for target detection is calculated from 0, to determine whether the radar apparatus meets the trigger condition before the radar apparatus switches a time-frequency resource used for target detection next time.

In a fourth example, the trigger condition may be that duration or a quantity of times of using the first time domain resource for target detection is greater than or equal to a fourth threshold, and a first value is greater than or equal to a fifth threshold. Alternatively, it may be considered that, when duration or a quantity of times of performing target detection by the radar apparatus by using the first time domain resource is greater than or equal to a fourth threshold, the trigger condition is that a first value is greater than or equal to a fifth threshold. The first value may be a random number generated by the radar apparatus.

For example, when determining that the duration or the quantity of times of using the first time domain resource for target detection is greater than or equal to the fourth threshold, the radar apparatus may generate a random number or obtain a value of the random number, that is, the first value. If the first value is greater than or equal to the fifth threshold, the radar apparatus determines the second time-frequency resource. To be specific, when the duration or the quantity of times of using the first time domain resource for target detection is greater than or equal to the fourth threshold, whether the radar apparatus switches a time-frequency resource used for target detection may be determined based on the value of the random number. It should be noted that the fourth threshold and the fifth threshold each may be a preset value, for example, a value that is set when the radar apparatus is delivered from a factory, and may be stored in the radar apparatus. Certainly, the fourth threshold and the fifth threshold each may alternatively be a value defined in a standard, or a value defined or configured in a protocol. This is not limited in this embodiment of this application.

The trigger condition ensures fairness of resource use by various radar apparatuses, and can further improve stability of a time-frequency resource used by the radar apparatus for target detection, to ensure accuracy of predicting, by another radar apparatus, a degree of interference imposed by the radar apparatus when the time-frequency resource is used for target detection. It should be understood that the radar apparatus meets the trigger condition, and in addition to determining a time-frequency resource used by the radar apparatus for target detection, the duration or the quantity of times of using the first time domain resource for target detection is further set to 0, that is, the duration or the quantity of times of using the first time domain resource for target detection is calculated from 0, to determine whether the radar apparatus meets the trigger condition before the radar apparatus switches a time-frequency resource used for target detection next time.

In this embodiment of this application, the radar apparatus may update duration or a quantity of times of continuously using a time-frequency resource, to ensure that duration or a quantity of times of continuously using a time-frequency resource by different radar apparatuses can be different, that is, ensure that occasions of switching, by different radar apparatuses, time-frequency resources used for target detection are different. This avoids mutual interference as much as possible that is caused when a plurality of radar apparatuses simultaneously switch time-frequency resources used for target detection. For example, the fourth threshold may be generated each time the radar apparatus determines the second time-frequency resource. Alternatively, the fourth threshold may be a new fourth threshold generated by the radar apparatus when the duration or the quantity of times of using the first time domain resource for target detection is greater than or equal to the specified fourth threshold. It should be understood that the radar apparatus generates the new fourth threshold, and updates the original fourth threshold to the new fourth threshold. Alternatively, the fourth threshold may be a new fourth threshold generated by the radar apparatus when the duration or the quantity of times of using the first time domain resource is greater than or equal to the specified fourth threshold and the radar apparatus determines the second time-frequency resource, the radar apparatus generates a new fourth threshold, and the original fourth threshold is updated to the new fourth threshold.

It should be understood that the new fourth threshold generated by the radar apparatus may be the same as or different from the previous fourth threshold.

In a fifth example, the trigger condition is that a quantity of first time domain resources used by the radar apparatus is greater than or equal to a sixth threshold. Similar to the first example, the trigger condition can ensure that a time-frequency resource used by the radar apparatus for target detection is relatively stable as much as possible, so that another radar apparatus can predict a degree of interference imposed by the radar apparatus when the time-frequency resource is used for target detection. In addition, the trigger condition can further ensure fairness of resource use by various radar apparatuses, to avoid a case in which a specific radar apparatus occupies a high-quality resource for a long period of time, and consequently another radar apparatus cannot use the high-quality resource, but can use only a low-quality resource.

It should be understood that the radar apparatus meets the trigger condition, and in addition to determining a time-frequency resource used by the radar apparatus for target detection, the accumulated quantity of first time domain resources used by the radar apparatus is further set to 0, that is, after the trigger condition is met, the quantity of used first time domain resources is accumulated from 0, to determine whether the radar apparatus meets the trigger condition before the radar apparatus switches a time-frequency resource used for target detection next time.

In a sixth example, the trigger condition is that a quantity of first time domain resources used by the radar apparatus is greater than or equal to a sixth threshold, and a second value is greater than or equal to a seventh threshold. Alternatively, it may be considered that, when the quantity of first time domain resources used by the radar apparatus is greater than or equal to the sixth threshold, the trigger condition is that the second value is greater than or equal to the seventh threshold. The second value may be a random number generated by the radar apparatus.

For example, when determining that the quantity of first time domain resources used by the radar apparatus is greater than or equal to the sixth threshold, the radar apparatus may generate a random number or obtain a value of the random number, that is, the second value. If the second value is greater than or equal to the seventh threshold, the radar apparatus determines the second time-frequency resource. To be specific, when the quantity of first time domain resources used by the radar apparatus is greater than or equal to the sixth threshold, whether the radar apparatus switches a time-frequency resource used for target detection may be determined based on the value of the random number. The sixth threshold and the seventh threshold each may be a preset value, for example, a value that is set when the radar apparatus is delivered from a factory, and may be stored in the radar apparatus. Certainly, the sixth threshold and the seventh threshold each may alternatively be a value defined in a standard, or a value defined or configured in a protocol. This is not limited in this embodiment of this application.

It should be understood that the radar apparatus meets the trigger condition, and in addition to determining a time-frequency resource used by the radar apparatus for target detection, the accumulated quantity of used first time domain resources is further set to 0, that is, after the trigger condition is met, the quantity of used first time domain resources is accumulated from 0, to determine whether the radar apparatus meets the trigger condition before the radar apparatus switches a time-frequency resource used for target detection next time.

In this embodiment of this application, the radar apparatus may update duration or a quantity of times of continuously using a time-frequency resource, to ensure that duration or a quantity of times of continuously using a time-frequency resource by different radar apparatuses can be different, that is, ensure that occasions of switching, by different radar apparatuses, time-frequency resources used for target detection are different. This avoids mutual interference as much as possible that is caused when a plurality of radar apparatuses simultaneously switch time-frequency resources used for target detection. For example, the sixth threshold may be generated each time the radar apparatus determines the second time domain resource. Alternatively, the sixth threshold may be a new sixth threshold generated by the radar apparatus when the accumulated quantity of used first time domain resources is greater than or equal to the specified sixth threshold, and the original sixth threshold is updated to the new sixth threshold. Alternatively, the sixth threshold may be a new sixth threshold generated by the radar apparatus when the accumulated quantity of used first time domain resources is greater than or equal to the specified sixth threshold and the radar apparatus determines the second time-frequency resource, and the original sixth threshold is updated to the new sixth threshold.

It should be understood that the new sixth threshold generated by the radar apparatus may be the same as or different from the previous sixth threshold.

The radar device determines the second time-frequency resource, and may perform target detection on the second time-frequency resource. For example, the radar device sends a radar signal on the second time-frequency resource, receives an echo signal from a target object, and may determine information such as a distance, an angle, and a speed of the target object relative to the radar apparatus based on the sent radar signal and the received echo signal, to implement target detection.

In this embodiment of this application, before performing target detection, the radar apparatus may perform interference interception on a time-frequency resource used by the radar apparatus or a time-frequency resource available to the radar apparatus, to predict, based on an interference interception result, an interference degree of a subsequent time-frequency resource used for target detection, so as to reselect, from the available time-frequency resource based on the interference degree, a time-frequency resource used for target detection, that is, exclude a time-frequency resource with a relatively high interference degree. This eliminates interference from another radar apparatus.

It should be noted that, in this application, "at least one" means one or more, and "a plurality of' means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. At least one of the following items (pieces) or a similar expression thereof is any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise stated, in embodiments of this application, ordinal numbers such as "first" and "second" are used to distinguish between a plurality of objects, and are not intended to limit an order, a time sequence, a priority, or importance of the plurality of objects.

The foregoing mainly describes the solutions provided in embodiments of this application from a perspective of the radar apparatus. With reference to the accompanying drawings, the following describes apparatuses configured to implement the foregoing methods in embodiments of this application. Therefore, the foregoing content may be used in the following embodiments. Repeated content is not described again.

It may be understood that to implement the foregoing functions, each apparatus, such as the radar apparatus, includes corresponding hardware structures and/or software modules for performing the functions. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, function modules of the radar apparatus may be obtained through division. For example, each function module may be obtained through division based on a corresponding function, or two or more functions may be integrated into one processing module. The integrated module may be implemented in a form of hardware, or may be implemented in a form of a software function module. It should be noted that, in embodiments of this application, division into modules is an example, and is merely logical function division. During actual implementation, another division manner may be used.

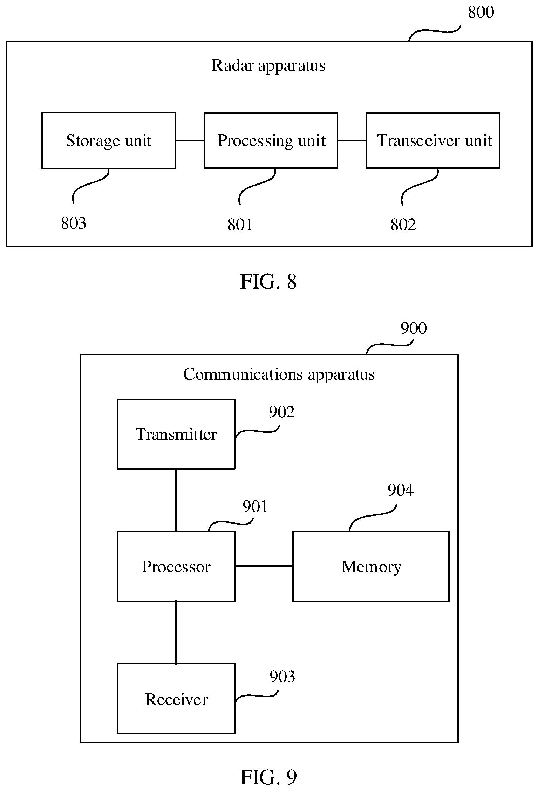

For example, when each function module of the radar apparatus is obtained through division in an integrated manner, FIG. 8 is a possible schematic diagram of a structure of the radar apparatus in the foregoing embodiments of this application. The radar apparatus 800 may include a processing unit 801 and a transceiver unit 802. Further optionally, the radar apparatus 800 may further include a storage unit 803. The storage unit 803 may be configured to store instructions (code or a program) and/or data. The transceiver unit 802 and the processing unit 801 may be coupled to the storage unit 803. For example, the processing unit 801 may read the instructions (the code or the program) and/or the data in the storage unit 803, to implement a corresponding method. The foregoing units may be disposed independently, or may be partially or completely integrated. It should be noted that the transceiver unit 802 may be a unit integrated with a transceiver function, or may include an independent sending unit and an independent receiving unit, to separately perform a sending function and a receiving function.

In some possible implementations, the radar apparatus 800 can correspondingly implement behavior and functions of the radar apparatus in the foregoing method embodiments. For example, the radar apparatus 800 may be the foregoing radar apparatus, or may be a component (for example, a chip or a circuit) applied to the foregoing radar apparatus. The transceiver unit 802 may be configured to perform all receiving or sending operations performed by the radar apparatus in the embodiment shown in FIG. 2, for example, S201 in the embodiment shown in FIG. 2, and/or another process used to support the technology described in this specification. The processing unit 801 is configured to perform all operations other than the receiving operation and the sending operation performed by the radar apparatus in the embodiment shown in FIG. 2, for example, S202 in the embodiment shown in FIG. 2, and/or another process used to support the technology described in this specification.

In some embodiments, the transceiver unit 802 is configured to perform at least one interference interception on a plurality of first time domain resources. The processing unit 801 is configured to determine a second time-frequency resource in a first time-frequency resource based on a result of the at least one interference interception. The plurality of first time domain resources are a subset of time domain resources corresponding to the first time-frequency resource, and the first time-frequency resource is a time-frequency resource of a first detection apparatus. Any two adjacent first time domain resources in the plurality of first time domain resources have a same time interval, and the interference interception is performed on some of the plurality of first time domain resources.

In a possible design, the transceiver unit 802 is further configured to perform at least one target detection on the plurality of first time domain resources, where at least one first time domain resource used for the at least one target detection does not overlap the some first time domain resources used for the at least one interference interception; or at least one first time domain resource used for the at least one target detection overlaps the some first time domain resources used for the at least one interference interception.

In a possible design, the at least one first time domain resource used for target detection includes at least three first time domain resources, and the at least three first time domain resources include a first group of first time domain resources and a second group of first time domain resources; and each group of first time domain resources includes two adjacent first time domain resources, and a time interval between two adjacent first time domain resources in the first group of first time domain resources is different from a time interval between two adjacent first time domain resources in the second group of first time domain resources.

In a possible design, the transceiver unit 802 is further configured to:
perform at least one interference interception on a plurality of second time domain resources, where the plurality of second time domain resources are a subset of time domain resources other than the plurality of first time domain resources in the time domain resources corresponding to the first time-frequency resource, and the at least one interference interception is performed on at least one of the plurality of second time domain resources.

In a possible design, duration of performing each interference interception is less than duration of the first time domain resource.

In a possible design, each second time domain resource includes M sub-time domain resources, a frequency domain resource corresponding to the first time-frequency resource includes N sub-frequency domain resources, and M and N are mutually prime; and the transceiver unit 802 is specifically configured to:
perform interference interception on a fifth time-frequency resource, where a time domain resource corresponding to the fifth time-frequency resource is one of the M sub-time domain resources, and a frequency domain resource corresponding to the fifth time-frequency resource is one of the N sub-frequency domain resources.

In a possible design, at least one of the following conditions is met:

At least one of the following conditions is met:
within preset duration, accumulated interference interception duration is greater than first duration; or
within preset duration, accumulated interference interception duration is less than second duration; or
within preset duration, duration used for target detection is less than third duration; or
within preset duration, accumulated interference interception duration that meets a preset condition is greater than fourth duration, where the preset condition includes one or a combination of the following conditions:
   a frequency domain resource corresponding to a time-frequency resource used for interference interception is a subset of frequency domain resources corresponding to a time-frequency resource used for target detection; or
   a frequency domain resource corresponding to a time-frequency resource used for interference interception partially overlaps or completely does not overlap a frequency domain resource corresponding to a time-frequency resource used for target detection; or
   a time domain resource corresponding to a time-frequency resource used for interference interception is a subset of the plurality of first time domain resources; or
   a time domain resource corresponding to a time-frequency resource used for interference interception is a subset of the time domain resources corresponding to the first time-frequency resource.

In a possible design, the processing unit 801 is specifically configured to:
determine power, energy, or spectral density of a signal received on the some first time domain resources used for the at least one interference interception; or
receive indication information on a sixth time-frequency resource, where the indication information indicates a seventh time-frequency resource used by a second detection apparatus to perform target detection, and determine power, energy, or spectral density of a signal received on the seventh time-frequency resource.

In a possible design, the processing unit 801 is specifically configured to:
receive the signal on the seventh time-frequency resource, and determine the power, energy, or spectral density of the received signal; or
determine, based on power, energy, or spectral density of a signal received on the sixth time-frequency resource, the power, energy, or spectral density of the signal received on the seventh time-frequency resource.

In a possible design, the processing unit 801 is specifically configured to:
determine an interference degree of a ninth time-frequency resource based on an interception result of an eighth time-frequency resource in the first time-frequency resource, or determine an interference degree of a ninth time-frequency resource based on interception results of a plurality of eighth time-frequency resources in the first time-frequency resource, where a first correspondence exists between the eighth time-frequency resource and the ninth time-frequency resource; and
determine the second time-frequency resource based on the interference degree of the ninth time-frequency resource, where the second time-frequency resource includes at least one ninth time-frequency resource, or the second time-frequency resource does not include the ninth time-frequency resource.

In a possible design, the processing unit 801 is specifically configured to:
determine the interference degree of the ninth time-frequency resource based on an average value of power, energy, or spectral density of signals received on the plurality of eighth time-frequency resources; or
determine the interference degree of the ninth time-frequency resource based on a quantity of at least one eighth time-frequency resource whose interference degree is greater than a preset threshold in the plurality of eighth time-frequency resources or a proportion of at least one eighth time-frequency resource whose interference degree is greater than a preset threshold in the plurality of eighth time-frequency resources.

In a possible design, the processing unit 801 is further configured to:
determine the second time-frequency resource when at least one of the following trigger conditions is met:
the ninth time-frequency resource belongs to a resource used for target detection in the first time-frequency resource, and the interference degree of the ninth time-frequency resource is greater than a first threshold; or
the ninth time-frequency resource does not belong to a resource used for target detection in the first time-frequency resource, and the interference degree of the ninth time-frequency resource is less than a second threshold; or
duration or a quantity of times of using a first time domain resource for target detection in the plurality of first time domain resources is greater than or equal to a third threshold; or
a first value is obtained when duration or a quantity of times of using a first time domain resource for target detection in the plurality of first time domain resources is greater than or equal to a third threshold, and the trigger condition is that the first value is greater than or equal to a fourth threshold; or
a quantity of first time domain resources used by the first detection apparatus is greater than or equal to a fifth threshold; or
a second value is obtained when a quantity of first time domain resources used by the first detection apparatus is greater than or equal to a fifth threshold, and the trigger condition is that the second value is greater than or equal to a sixth threshold.

In a possible design, the processing unit 801 is further configured to:
update the third threshold when the first value is greater than or equal to the fourth threshold; or update the third threshold when the duration or the quantity of times of using the first time domain resource for target detection in the plurality of first time domain resources is greater than or equal to the specified third threshold.

In a possible design, the processing unit 801 is further configured to:
update the fifth threshold when the second value is greater than or equal to the sixth threshold; or update the fifth threshold when the quantity of first time domain resources used by the first detection apparatus is greater than or equal to the specified fifth threshold.

It should be understood that the processing unit 801 in embodiments of this application may be implemented by a processor or a processor-related circuit component, and the transceiver unit 802 may be implemented by a transceiver, a transceiver-related circuit component, or a communications interface. It should be understood that the transceiver may include, for example, a transmitter and a receiver. The processor, the transmitter, and the receiver are coupled to each other. The transmitter and the receiver are implemented, for example, by an antenna, a feeder, and a codec in the radar apparatus. Alternatively, if the radar apparatus is a chip disposed in a detection device, the transmitter and the receiver each are, for example, a communications interface in the chip. The communications interface is connected to a radio frequency transceiver component in the detection device, to implement information receiving and sending by using the radio frequency transceiver component.

For example, FIG. 9 is another possible schematic diagram of a structure of a communications apparatus 900 according to an embodiment of this application. The communications apparatus 900 may include a processor 901, a transmitter 902, and a receiver 903. Functions thereof may separately correspond to specific functions of the processing unit 801 and the transceiver unit 802 shown in FIG. 8. Details are not described herein again. Optionally, the communications apparatus may further include a memory 904, configured to store program instructions and/or data for the processor 901 to read.

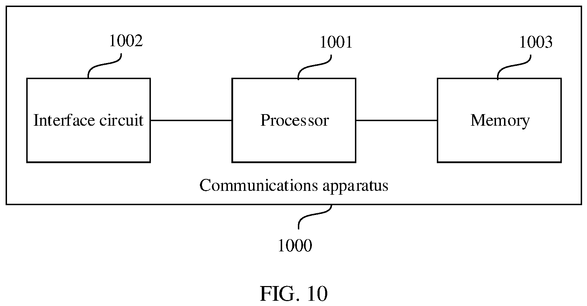

FIG. 10 is another possible schematic diagram of a structure of a communications apparatus 1000 according to an embodiment of this application. The communications apparatus 10 may be a radar apparatus, or may be a chip or a circuit that can implement a function of the radar apparatus. For example, the chip or the circuit may be disposed in the radar apparatus. The communications apparatus 1000 may include a processor 1001 (for example, the processing unit 801 may be implemented by the processor 901, and the processor 901 and the processor 1001 may be a same component) and an interface circuit 1002 (for example, the transceiver unit 802 may be implemented by the interface circuit 1002, and the interface circuit 1002 and each of the transmitter 902 and the receiver 903 are a same component). The processor 1001 may enable the communications apparatus 1000 to implement the steps performed by the radar apparatus in the method provided in the embodiment shown in FIG. 2. Optionally, the communications apparatus 1000 may further include a memory 1003, and the memory 1003 may be configured to store instructions. The processor 1001 executes the instructions stored in the memory 1003, so that the communications apparatus 1000 implements the steps performed by the radar apparatus in the method provided in the embodiment shown in FIG. 2.

Further, the processor 1001, the interface circuit 1002, and the memory 1003 may communicate with each other over an internal connection path, to transfer a control signal and/or a data signal. The memory 1003 is configured to store a computer program. The processor 1001 may invoke the computer program from the memory 1003 and run the computer program, to control the interface circuit 1002 to receive a signal or send a signal, to implement the steps performed by the radar apparatus in the method provided in the embodiment shown in FIG. 2. The memory 1003 may be integrated into the processor 1001, or may be disposed separately from the processor 1001.

Optionally, if the communications apparatus 1000 is a device, the interface circuit 1002 may include a receiver and a transmitter. The receiver and the transmitter may be a same component or different components. When the receiver and the transmitter are a same component, the component may be referred to as a transceiver.

Optionally, if the communications apparatus 1000 is a chip or a circuit, the interface circuit 1002 may include an input interface and an output interface, and the input interface and the output interface may be a same interface or different interfaces.

Optionally, if the communications apparatus 1000 is a chip or a circuit, the communications apparatus 1000 may not include the memory 1003. The processor 1001 may read instructions (a program or code) from a memory outside the chip or the circuit, to implement the steps performed by the radar apparatus in the method provided in the embodiment shown in FIG. 2.

Optionally, if the communications apparatus 1000 is a chip or a circuit, the communications apparatus 1000 may include a resistor, a capacitor, or another corresponding function component, and the processor 1001 or the interface circuit 1002 may be implemented by a corresponding function component.

In an implementation, it may be considered that a function of the interface circuit 1002 is implemented by a transceiver circuit or a transceiver-dedicated chip. It may be considered that the processor 1001 is implemented by a dedicated processing chip, a processing circuit, a processor, or a general-purpose chip.

In another implementation, it may be considered to implement the radar apparatus provided in this embodiment of this application by using a general-purpose computer. That is, program code for implementing functions of the processor 1001 and the interface circuit 1002 is stored in the memory 1003, and the processor 1001 implements the functions of the processor 1001 and the interface circuit 1002 by executing the program code stored in the memory 1003.

The functions and actions of the foregoing listed modules or units in the communications apparatus 1000 are merely examples for description, and the function units in the communications apparatus 1000 may be configured to perform the actions or processing processes performed by the radar apparatus in the embodiment shown in FIG. 2. To avoid repetition, details are not described herein.

In still another optional manner, when software is used to implement the radar apparatus, the radar apparatus may be implemented completely or partially in a form of a computer program product. The computer program product includes one or more computer instructions. When the computer program instructions are loaded and executed on a computer, the procedure or functions according to embodiments of this application are all or partially implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

It should be noted that the processor included in the radar apparatus configured to perform the target detection method provided in embodiments of this application may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. The processor may alternatively be a combination of processors implementing a computing function, for example, a combination of one or more microprocessors, or a combination of the DSP and a microprocessor.

Method or algorithm steps described in combination with embodiments of this application may be implemented by hardware, or may be implemented by a processor by executing software instructions. The software instruction may include a corresponding software module, and the software module may be stored in a random access memory (random access memory, RAM), a flash memory, a read-only memory (read-only memory, ROM), an erasable programmable read-only memory (erasable programmable read-only memory, EPROM), an electrically erasable programmable read-only memory (electrically erasable programmable read-only memory, EEPROM), a register, a hard disk, a removable hard disk, a compact disc read-only memory (compact disc read-only memory, CD-ROM), or any other form of storage medium well known in the art. An example storage medium is coupled to a processor, so that the processor can read information from the storage medium or write information into the storage medium. Certainly, the storage medium may further be a component of the processor. The processor and the storage medium may be located in an ASIC. In addition, the ASIC may be located in a radar apparatus or a detection device on which a radar apparatus is installed. Certainly, the processor and the storage medium may alternatively exist in the radar apparatus or the detection device on which the radar apparatus is installed as discrete components.

It may be understood that FIG. 8 to FIG. 10 merely shows simplified designs of the radar apparatus. In an actual application, the radar apparatus may include any quantity of transmitters, receivers, processors, controllers, memories, and another element that may exist.

Based on the foregoing descriptions of the implementations, a person skilled in the art may clearly understand that for the purpose of convenient and brief descriptions, division into the foregoing function modules is merely used as an example for descriptions. During actual application, the foregoing functions can be allocated to different function modules for implementation based on a requirement, in other words, an inner structure of an apparatus is divided into different function modules to implement all or a part of the functions described above.

An embodiment of this application further provides a sensor system. The sensor system includes at least one radar apparatus described above. Further optionally, the sensor system further includes at least one camera and/or a laser radar.

An embodiment of this application further provides a transportation means, for example, a vehicle, an unmanned aerial vehicle, or an unmanned vehicle, including the foregoing sensor system.

An embodiment of this application further provides a communications system. The communications system includes at least one radar apparatus described above.

An embodiment of this application further provides a computer-readable storage medium, including instructions. When the instructions are run on a computer, the computer is enabled to perform the method performed by the radar apparatus in FIG. 2.

In the several embodiments provided in this application, it should be understood that the disclosed apparatus and method may be implemented in other manners. For example, the described apparatus embodiments are merely examples. For example, the division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, in other words, may be located in one place, or may be distributed on different places. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are only specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A target detection method, wherein the method comprises:
performing at least one interference interception on a plurality of first time domain resources, wherein the plurality of first time domain resources are a subset of time domain resources corresponding to a first time-frequency resource, and the first time-frequency resource is a time-frequency resource of a first detection apparatus; and any two adjacent first time domain resources in the plurality of first time domain resources have a same time interval, and the interference interception is performed on some of the plurality of first time domain resources; and
determining a second time-frequency resource in the first time-frequency resource based on a result of the at least one interference interception, wherein the second time-frequency resource is used for target detection.

2. The method according to claim 1, wherein the method further comprises:
performing at least one target detection on the plurality of first time domain resources, wherein at least one first time domain resource used for the at least one target detection does not overlap the some first time domain resources used for the at least one interference interception.

3. The method according to claim 2, wherein the at least one first time domain resource used for target detection comprises at least three first time domain resources, and the at least three first time domain resources comprise a first group of first time domain resources and a second group of first time domain resources; and each group of first time domain resources comprises two adjacent first time domain resources, and a time interval between two adjacent first time domain resources in the first group of first time domain resources is different from a time interval between two adjacent first time domain resources in the second group of first time domain resources.

4. The method according to any one of claims 1 to 3, wherein the method further comprises:
performing at least one interference interception on a plurality of second time domain resources, wherein the plurality of second time domain resources are a subset of time domain resources other than the plurality of first time domain resources in the time domain resources corresponding to the first time-frequency resource, and the at least one interference interception is performed on at least one of the plurality of second time domain resources.

5. The method according to any one of claims 1 to 4, wherein duration of performing each interference interception is less than duration of the first time domain resource.

6. The method according to claim 4 or 5, wherein each second time domain resource comprises M sub-time domain resources, a frequency domain resource corresponding to the first time-frequency resource comprises N sub-frequency domain resources, and M and N are mutually prime; and the performing at least one interference interception on a plurality of second time domain resources comprises:
performing interference interception on a fifth time-frequency resource, wherein a time domain resource corresponding to the fifth time-frequency resource is one of the M sub-time domain resources, and a frequency domain resource corresponding to the fifth time-frequency resource is one of the N sub-frequency domain resources.

7. The method according to any one of claims 1 to 6, wherein at least one of the following conditions is met:
within first preset duration, interference interception duration is greater than first duration; or
within second preset duration, interference interception duration is less than second duration; or
within third preset duration, duration used for target detection is less than third duration; or
within fourth preset duration, interference interception duration that meets a preset condition is greater than fourth duration, wherein the preset condition comprises one or a combination of the following conditions:
a frequency domain resource corresponding to a time-frequency resource used for interference interception is a subset of frequency domain resources corresponding to a time-frequency resource used for target detection; or
a frequency domain resource corresponding to a time-frequency resource used for interference interception partially overlaps or completely does not overlap a frequency domain resource corresponding to a time-frequency resource used for target detection; or
a time domain resource corresponding to a time-frequency resource used for interference interception is a subset of the plurality of first time domain resources; or
a time domain resource corresponding to a time-frequency resource used for interference interception is a subset of the time domain resources corresponding to the first time-frequency resource.

8. The method according to any one of claims 1 to 7, wherein the performing at least one interference interception comprises:
determining power, energy, or spectral density of a signal received on the some first time domain resources used for the at least one interference interception; or
receiving indication information on a sixth time-frequency resource, wherein the indication information indicates a seventh time-frequency resource used by a second detection apparatus to perform target detection, and determining power, energy, or spectral density of a signal received on the seventh time-frequency resource.

9. The method according to claim 8, wherein the receiving indication information on a sixth time-frequency resource, wherein the indication information indicates a seventh time-frequency resource used by a second detection apparatus to perform target detection, and determining power, energy, or spectral density of a signal received on the seventh time-frequency resource comprises:
receiving the signal on the seventh time-frequency resource, and determining the power, energy, or spectral density of the received signal; or
determining, based on power, energy, or spectral density of a signal received on the sixth time-frequency resource, the power, energy, or spectral density of the signal received on the seventh time-frequency resource.

10. The method according to any one of claims 1 to 9, wherein the determining a second time-frequency resource in the first time-frequency resource based on a result of the at least one interference interception comprises:
determining an interference degree of a ninth time-frequency resource based on an interception result of an eighth time-frequency resource in the first time-frequency resource, or determining an interference degree of a ninth time-frequency resource based on interception results of a plurality of eighth time-frequency resources in the first time-frequency resource, wherein a first correspondence exists between the eighth time-frequency resource and the ninth time-frequency resource; and
determining the second time-frequency resource based on the interference degree of the ninth time-frequency resource, wherein the second time-frequency resource comprises at least one ninth time-frequency resource, or the second time-frequency resource does not comprise the ninth time-frequency resource.

11. The method according to claim 10, wherein the determining an interference degree of a ninth time-frequency resource based on interception results of a plurality of eighth time-frequency resources in the first time-frequency resource comprises:
determining the interference degree of the ninth time-frequency resource based on an average value of power, energy, or spectral density of signals received on the plurality of eighth time-frequency resources; or
determining the interference degree of the ninth time-frequency resource based on a quantity of at least one eighth time-frequency resource whose interference degree is greater than a preset threshold in the plurality of eighth time-frequency resources or a proportion of at least one eighth time-frequency resource whose interference degree is greater than a preset threshold in the plurality of eighth time-frequency resources.

12. The method according to claim 10 or 11, wherein the determining a second time-frequency resource in the first time-frequency resource based on a result of the at least one interference interception comprises:
determining the second time-frequency resource when at least one of the following trigger conditions is met:
the ninth time-frequency resource belongs to a resource used for target detection in the first time-frequency resource, and the interference degree of the ninth time-frequency resource is greater than a first threshold; or
the ninth time-frequency resource does not belong to a resource used for target detection in the first time-frequency resource, and the interference degree of the ninth time-frequency resource is less than a second threshold; or
duration or a quantity of times of using a first time domain resource for target detection in the plurality of first time domain resources is greater than or equal to a third threshold; or
a first value is obtained when duration or a quantity of times of using a first time domain resource for target detection in the plurality of first time domain resources is greater than or equal to a third threshold, and the trigger condition is that the first value is greater than or equal to a fourth threshold; or
a quantity of first time domain resources used by the first detection apparatus is greater than or equal to a fifth threshold; or
a second value is obtained when a quantity of first time domain resources used by the first detection apparatus is greater than or equal to a fifth threshold, and the trigger condition is that the second value is greater than or equal to a sixth threshold.

13. The method according to claim 12, wherein the method further comprises:
updating the third threshold when the first value is greater than or equal to the fourth threshold; or updating the third threshold when the duration or the quantity of times of using the first time domain resource for target detection in the plurality of first time domain resources is greater than or equal to the specified third threshold.

14. The method according to claim 12, wherein the method further comprises:
updating the fifth threshold when the second value is greater than or equal to the sixth threshold; or updating the fifth threshold when the quantity of first time domain resources used by the first detection apparatus is greater than or equal to the specified fifth threshold.

15. An apparatus, comprising a transceiver unit and a processing unit, wherein
the transceiver unit is configured to perform at least one interference interception on a plurality of first time domain resources, wherein the plurality of first time domain resources are a subset of time domain resources corresponding to a first time-frequency resource, and the first time-frequency resource is a time-frequency resource of a first detection apparatus; and any two adjacent first time domain resources in the plurality of first time domain resources have a same time interval, and the interference interception is performed on some of the plurality of first time domain resources; and
the processing unit is configured to determine a second time-frequency resource in the first time-frequency resource based on a result of the at least one interference interception, wherein the second time-frequency resource is used for target detection.

16. The apparatus according to claim 15, wherein the transceiver unit is further configured to perform at least one target detection on the plurality of first time domain resources, wherein at least one first time domain resource used for the at least one target detection does not overlap the some first time domain resources used for the at least one interference interception.

17. The apparatus according to claim 15 or 16, wherein the at least one first time domain resource used for target detection comprises at least three first time domain resources, and the at least three first time domain resources used for target detection comprise a first group of first time domain resources and a second group of first time domain resources; and each group of first time domain resources comprises two adjacent first time domain resources, and a time interval between two adjacent first time domain resources in the first group of first time domain resources is different from a time interval between two adjacent first time domain resources in the second group of first time domain resources.

18. The apparatus according to any one of claims 15 to 17, wherein the transceiver unit is further configured to:
perform at least one interference interception on a plurality of second time domain resources, wherein the plurality of second time domain resources are a subset of time domain resources other than the plurality of first time domain resources in the time domain resources corresponding to the first time-frequency resource, and the at least one interference interception is performed on at least one of the plurality of second time domain resources.

19. The apparatus according to any one of claims 15 to 18, wherein duration of performing each interference interception is less than duration of the first time domain resource.

20. The apparatus according to claim 18 or 19, wherein each second time domain resource comprises M sub-time domain resources, a frequency domain resource corresponding to the first time-frequency resource comprises N sub-frequency domain resources, and M and N are mutually prime; and the transceiver unit is specifically configured to:
perform interference interception on a fifth time-frequency resource, wherein a time domain resource corresponding to the fifth time-frequency resource is one of the M sub-time domain resources, and a frequency domain resource corresponding to the fifth time-frequency resource is one of the N sub-frequency domain resources.

21. The apparatus according to any one of claims 15 to 20, wherein at least one of the following conditions is met:
within preset duration, accumulated interference interception duration is greater than first duration; or
within preset duration, accumulated interference interception duration is less than second duration; or
within preset duration, duration used for target detection is less than third duration; or
within preset duration, accumulated interference interception duration that meets a preset condition is greater than fourth duration, wherein the preset condition comprises one or a combination of the following conditions:
a frequency domain resource corresponding to a time-frequency resource used for interference interception is a subset of frequency domain resources corresponding to a time-frequency resource used for target detection; or
a frequency domain resource corresponding to a time-frequency resource used for interference interception partially overlaps or completely does not overlap a frequency domain resource corresponding to a time-frequency resource used for target detection; or
a time domain resource corresponding to a time-frequency resource used for interference interception is a subset of the plurality of first time domain resources; or
a time domain resource corresponding to a time-frequency resource used for interference interception is a subset of the time domain resources corresponding to the first time-frequency resource.

22. The apparatus according to any one of claims 15 to 21, wherein the processing unit is specifically configured to:
determine power, energy, or spectral density of a signal received on the some first time domain resources used for the at least one interference interception; or
receive indication information on a sixth time-frequency resource, wherein the indication information indicates a seventh time-frequency resource used by a second detection apparatus to perform target detection, and determine power, energy, or spectral density of a signal received on the seventh time-frequency resource.

23. The apparatus according to claim 22, wherein the processing unit is specifically configured to:
receive the signal on the seventh time-frequency resource, and determine the power, energy, or spectral density of the received signal; or
determine, based on power, energy, or spectral density of a signal received on the sixth time-frequency resource, the power, energy, or spectral density of the signal received on the seventh time-frequency resource.

24. The apparatus according to any one of claims 15 to 23, wherein the processing unit is specifically configured to:
determine an interference degree of a ninth time-frequency resource based on an interception result of an eighth time-frequency resource in the first time-frequency resource, or determine an interference degree of a ninth time-frequency resource based on interception results of a plurality of eighth time-frequency resources in the first time-frequency resource, wherein a first correspondence exists between the eighth time-frequency resource and the ninth time-frequency resource; and
determine the second time-frequency resource based on the interference degree of the ninth time-frequency resource, wherein the second time-frequency resource comprises at least one ninth time-frequency resource, or the second time-frequency resource does not comprise the ninth time-frequency resource.

25. The apparatus according to claim 24, wherein the processing unit is specifically configured to:
determine the interference degree of the ninth time-frequency resource based on an average value of power, energy, or spectral density of signals received on the plurality of eighth time-frequency resources; or
determine the interference degree of the ninth time-frequency resource based on a quantity of at least one eighth time-frequency resource whose interference degree is greater than a preset threshold in the plurality of eighth time-frequency resources or a proportion of at least one eighth time-frequency resource whose interference degree is greater than a preset threshold in the plurality of eighth time-frequency resources.

26. The apparatus according to claim 24 or 25, wherein the processing unit is further configured to:
determine the second time-frequency resource when at least one of the following trigger conditions is met:
the ninth time-frequency resource belongs to a resource used for target detection in the first time-frequency resource, and the interference degree of the ninth time-frequency resource is greater than a first threshold; or
the ninth time-frequency resource does not belong to a resource used for target detection in the first time-frequency resource, and the interference degree of the ninth time-frequency resource is less than a second threshold; or
duration or a quantity of times of using a first time domain resource for target detection in the plurality of first time domain resources is greater than or equal to a third threshold; or
a first value is obtained when duration or a quantity of times of using a first time domain resource for target detection in the plurality of first time domain resources is greater than or equal to a third threshold, and the trigger condition is that the first value is greater than or equal to a fourth threshold; or
a quantity of first time domain resources used by the first detection apparatus is greater than or equal to a fifth threshold; or
a second value is obtained when a quantity of first time domain resources used by the first detection apparatus is greater than or equal to a fifth threshold, and the trigger condition is that the second value is greater than or equal to a sixth threshold.

27. The apparatus according to claim 26, wherein the processing unit is further configured to:
update the third threshold when the first value is greater than or equal to the fourth threshold; or update the third threshold when the duration or the quantity of times of using the first time domain resource for target detection in the plurality of first time domain resources is greater than or equal to the specified third threshold.

28. The apparatus according to claim 26, wherein the processing unit is further configured to:
update the fifth threshold when the second value is greater than or equal to the sixth threshold; or update the fifth threshold when the quantity of first time domain resources used by the first detection apparatus is greater than or equal to the specified fifth threshold.

29. An apparatus, wherein the apparatus comprises:
a memory, configured to store instructions; and
a processor, configured to invoke the instructions from the memory and run the instructions, so that the apparatus or a device on which the apparatus is installed performs the method according to any one of claims 1 to 14.

30. A computer-readable storage medium, wherein the computer-readable storage medium stores a computer program, and when the computer program is run on an apparatus, the apparatus is enabled to perform the method according to any one of claims 1 to 14.

31. A computer program product, wherein the computer program product comprises a computer program, and when the computer program is run on an apparatus, the apparatus is enabled to perform the method according to any one of claims 1 to 14.
